# EUROPÄISCHE PATENTANMELDUNG

(11) **EP 2 437 364 A2**
(43) Veröffentlichungstag der Anmeldung: **04.04.2012**
(21) Anmeldenummer: 11007564.5
(22) Anmeldetag: 16.09.2011
(51) Int. Cl.: H02G 3/12, H02B 1/04

(54) **Rahmenprofileinsatz, damit ausgestattete Flügelanlage und Montageverfahren dafür**

(30) Priorität: 30.09.2010 DE 102010037880
(71) Anmelder: Dorma GmbH + Co. KG, 58256 Ennepetal (DE)
(72) Erfinder: Drux, Matthias, 58285 Gevelsberg (DE); Schweitzer, Falko, 58332 Schwelm (DE); Lange, Siegfried, Dr., 58339 Breckerfeld (DE); Hellwig, Alexander, 58256 Ennepetal (DE)

(57) **Zusammenfassung**

Ein erfindungsgemäßer Einsatz (7, 100, 200) umfasst einen Anbringabschnitt (300), der gestaltet ist, bei Beenden eines Einschiebens des Einsatzes (7, 100, 200) in eine zugehörige, in Einschubrichtung zumindest bereichsweise mittels einer Ausnehmung hinterschnittene Öffnung (12) eines Wandabschnitts (10) in der Öffnung (12) zugleich fixiert zu werden. Der Einsatz (7, 100, 200) umfasst ferner eine erste Befestigungsvorrichtung (312, 313, 317, 325) und eine Komponente (110, 210). Die Komponente (110, 210) weist eine mit zumindest einem Teil der ersten Befestigungsvorrichtung (312, 313, 317, 325) korrespondierende zweite Befestigungsvorrichtung (112, 113; 211, 214) auf. Mittels dieses zumindest Teils ist die Komponente (110, 210) an die erste Befestigungsvorrichtung (312, 313, 317, 325) des Anbringabschnitts (300) ortsfest anbringbar gestaltet.

Eine erfindungsgemäße Flügelanlage (1) umfasst zumindest einen Flügel und den Wandabschnitt (10). Der Wandabschnitt (10) weist zumindest an einer Außenwand (15) zumindest eine von einer Ausnehmung hinterschnittene Öffnung (12) als vorstehend angegebene Einschuböffnung (12) auf. Die Anlage zudem einen Einsatz (7, 100, 200) auf.

Der Einsatz (7, 100, 200) wird montiert, indem die Komponente (110, 210) am zugehörigen Anbringabschnitt (300) befestigt wird. Danach wird das so gebildete Einsatzmodul in die dafür vorgesehene Öffnung (12) im Wandabschnitt (10) eingeschoben und zugleich fixiert bzw. arretiert.

## Beschreibung

Die Erfindung betrifft Einsätze für Rahmenprofile von Flügelanlagen, insbesondere von Türanlagen, damit ausgestattete Anlagen sowie ein damit verbundenes Montageverfahren.

Um Flügelanlagen bedienen zu können oder beispielsweise deren momentanen Betriebszustand anzuzeigen, werden häufig zusätzliche Betätigungs- bzw. Anzeigeelemente verwendet, die üblicherweise als 55 mm-Einsätze in entsprechend breiten Profilen oder Wänden eingesetzt sind. Derartige Einsätze eignen sich nicht für Anlagen, die beispielsweise als Fassade nur über relativ schmale Profile verfügen.

Daher gibt es für diese Anlagen zusätzliche, im Raum stehende Säulen, in denen diese Einsätze eingesetzt sind. Die Säulen können zum einen ein erhebliches Verletzungsrisiko darstellen, insbesondere bei Massenveranstaltungen, wenn beispielsweise eine Panik entsteht. Zum anderen ist diese Lösung optisch nicht sehr vorteilhaft. Abgesehen davon, gibt es nicht immer den Platz, derartige Säulen bedienerfreundlich zu platzieren.

In der EP 1 848 082 A1 ist eine Hohlwand-Installation beschrieben, bei der eine Gerätedose in eine Öffnung einer Verkleidungsplatte eingeschoben wird und daraufhin mittels Schraubkrallen endgültig fixiert wird. D.h. zur Fixierung sind zwei Arbeitsschritte und drei Teile, nämlich die Gerätedose mit vier Schrauböffnungen, in jeder Schrauböffnung eine frei rotierbar aufgenommene Schraube und eine jeweils aufgeschraubte Schraubkralle, erforderlich. D. h. es ist eine Mehrzahl an Teilen erforderlich, um einen Einsatz beispielsweise in Form eines Schalters in einer Hohlwand zu fixieren, was kostenungünstig ist. Zudem müssen diese Schrauben solange von außen zugänglich sein, solange die Gerätedose nicht fixiert ist. Um eine ungewollte Demontage beispielsweise aufgrund von Sicherheitsnormen entsprechend zu erschweren, werden die Schrauben nach dem Fixieren in einem nunmehr dritten Arbeitsschritt noch abgedeckt bzw. unzugänglich gemacht, indem abschließend ein Abdeckrahmen aufgesetzt wird. Insgesamt ergibt sich eine relativ komplexe Montage.

Aufgabe der Erfindung ist es, die vorgenannten Nachteile zumindest zu verringern.

Diese Aufgabe wird durch den Gegenstand der Ansprüche 1, 24 und 25 gelöst. Vorteilhafte Weiterbildungen der Erfindung sind in den Unteransprüchen angegeben.

Ein erfindungsgemäßer Einsatz umfasst einen Anbringabschnitt, der gestaltet ist, bei Beenden eines Einschiebens des Einsatzes in eine zugehörige, in Einschubrichtung zumindest bereichsweise mittels einer Ausnehmung hinterschnittene Öffnung eines Wandabschnitts in der Öffnung zugleich fixiert zu werden. D. h. die möglicherweise durchgehend ausgebildete Ausnehmung weist eine Tiefe auf, die ausreicht, den Anbringabschnitt volumenmäßig aufzunehmen. Durch den Hinterschnitt ist die Öffnung gestaltet, dass sie im dem Einsatz zugewandten, außenseitigen Bereich zumindest teilweise eine geringere Öffnungsweite hat als die in Einschubrichtung dahinter liegende Ausnehmung. Speziell kann solch ein Wandabschnitt als Hohlwand oder Teil davon beispielsweise in Form zweier zueinander im Abstand angeordneter Rigipsplatten als Bestandteile solch einer Wand ausgebildet sein. Alternativ ist der Wandabschnitt mittels eines vorzugsweise vollständig hohlen Rahmenprofils gebildet oder weist ein solches auf. Aufgrund der vorgenannten Ausführung gibt es nur noch einen Arbeitsschritt, was die Montage vereinfacht und die Fehlerquote beim Einsetzen verringern hilft. Der Einsatz umfasst ferner eine erste Befestigungsvorrichtung und eine Komponente. Die Komponente stellt funktional das eigentlich zu montierende Teil dar und kann beispielsweise als Sensor, Schalter, Anzeige oder dergleichen ausgebildet sein. Die Komponente weist eine mit zumindest einem Teil der ersten Befestigungsvorrichtung korrespondierende zweite Befestigungsvorrichtung auf. Mittels dieses zumindest Teils ist die Komponente an die erste Befestigungsvorrichtung des Anbringabschnitts ortsfest anbringbar gestaltet. Diese bietet den Vorteil, die Komponente vor dem Einschieben in den Wandabschnitt montieren zu können und dann als Ganzes in den Wandabschnitt einschieben und im Zuge dessen zugleich ortsfest fixieren zu können. Aufgrund des mit dem Einschieben verbundenen ortsfesten Fixierens des Einsatzes entfallen die üblicherweise zusätzlich notwendigen Befestigungsmittel in Form von Schrauben, die in einen Tragrahmen oder -ring einzuschrauben sind, und so auch die dafür notwendigen Befestigungslöcher in ebenjenem Tragrahmen oder -ring. Damit können die Abmessungen der Öffnung, der Ausnehmung und des Einsatzes quer zur Einschubrichtung des Einsatzes gegenüber bekannten Lösungen enorm verringert werden. Zudem entfallen die üblicherweise verwendeten Abdeckrahmen dieser Einsätze, was kostengünstig ist. Der Einsatz verfügt zudem über einen Freigabemechanismus, bei dessen Betätigung der Anbringabschnitt außer Eingriff mit dem Wandabschnitt gebracht wird. D. h. der Einsatz kann ohne weiteres, insbesondere zerstörungsfrei, wieder aus dem Wandabschnitt entnommen werden.

Vorzugsweise weist der Anbringabschnitt einen Auflageabschnitt auf, der beim Einschieben des Einsatzes in Richtung Öffnung gerichtet ist und zudem gestaltet ist, beim Einschieben des Einsatzes in die zugehörige Öffnung bzw. Ausnehmung des Wandabschnitts auf einer dem Einsatz zugewandten, mit der zugehörigen Öffnung versehenen Außenwand des Wandabschnitts zu liegen zu kommen. D. h. der Auflageabschnitt kann die Öffnung nicht passieren und definiert somit die maximale Einsetztiefe des Einsatzes in den Wandabschnitt. Der Anbringabschnitt umfasst ferner zwei, vorzugsweise vier, paarweise einander gegenüberliegende, voneinander wegweisende Seitenwände. Diese Seitenwände dienen als Führung des Einsatzes bei dessen Einschieben in die zugehörige Wandöffnung, führen ihn also in Einschubrichtung entlang dieser Öffnung. Demzufolge liegen die betreffenden (Führungs-)Seitenwände beim Einschieben des Einsatzes einem Seitenrand der zugehörigen Öffnung gegenüber. Die paarweise einander gegenüberliegenden Seitenwände weisen zueinander einen Abstand auf, der folglich kleiner oder gleich einem Abstand der ihnen gegenüberliegenden, einander zugewandten Ränder der Öffnung ist. D. h. diese Seitenwände erstrecken sich in Einschubrichtung des Einsatzes. Zwei paarweise gegenüberliegende Seitenwände sind zusätzlich mit jeweils einer Rast- und/oder Klemmvorrichtung versehen. Die somit paarweisen Rast- und/oder Klemmvorrichtungen sind einem jeweiligen der zwei Seitenränder der Öffnung zugewandt ausgebildet und weisen voneinander weg. Sie sind der mit der Öffnung versehenen Außenwand zugewandt, erstrecken sich also in Richtung des jeweils zugewandten Öffnungs-Seitenrands. Sie haben zudem, in eine Richtung quer zur Einschubrichtung des Einsatzes gesehen, zu den vorgenannten Seitenwänden des Einsatzes einen Abstand, der so bemessen ist, dass das ortsfeste Fixieren des Einsatzes im Wandabschnitt erfolgt, indem die mit der zugehörigen Öffnung versehene Außenwand des Wandabschnitts zwischen den Auflageflächen und den Rast- und/oder Klemmvorrichtungen eingeklemmt ist. Diese Vorrichtungen können beispielsweise mittels abgerundeter Rastnasen gebildet sein.

Der Auflageabschnitt hat vorzugsweise eine Breite in Richtung eines jeweils zugewandten Seitenrands der Öffnung von weniger als 5 mm. Vorzugsweise liegt er im Bereich von 2 mm. D. h. der erfindungsgemäße Einsatz bzw. dessen Anbringabschnitt benötigt eine gegenüber dem Stand der Technik wesentlich geringere Auflagefläche, wodurch die Abmessungen des Einsatzes insgesamt verringert werden.

Alternativ oder zusätzlich umfasst der Anbringabschnitt ein Halteprofil und zwei Befestigungsteile. Die Befestigungsteile sind an zwei einander abgewandten Seiten des Halteprofils an diesem befestigt und weisen selbst jeweils einen ersten -Befestigungsabschnitt auf. Diese ersten Befestigungsabschnitte sind gestaltet, den Anbringabschnitt am oder im Wandabschnitt zu fixieren. In Bezug auf die vorgenannten Rast- und/oder Klemmvorrichtungen bilden diese zumindest zum Teil die ersten Befestigungsabschnitte. Diese Lösung ermöglicht, das Halteprofil von der Fixierfunktion in der Öffnung des Wandabschnitts zu entbinden und beispielsweise hinsichtlich Stabilität optimieren zu können. Die Befestigungsteile hingegen können zumindest hinsichtlich ihrer Befestigungsfunktion optimiert werden. Da sie mit der Öffnung in Kontakt treten können, sind sie aus Kunststoff herstellbar, wohingegen das Halteprofil aus formstabilerem Material wie Aluminium hergestellt sein kann.

Vorzugsweise wird bei Betätigung des Freigabemechanismus' zumindest eines der Befestigungsteile des Anbringabschnitts außer Eingriff mit dem Wandabschnitt gebracht. D. h. dieser Mechanismus dient der Demontage eines in einen Wandabschnitt eingesetzten Einsatzes. Im Falle der vorgenannten Rastnasen können diese an einem in Einschubrichtung weisenden Ende federnd gelagert sein und mit einer Wandung versehen sein. Die Wandung geht von einem entgegen der Einschubrichtung weisenden Ende der Rastnase ab und erstreckt sich quer zur Einschubrichtung in das Innere des Einsatzes. So kann sie von außen niedergedrückt werden, womit die Rastnase ebenfalls ins Einsatzinnere geschwenkt wird, irgendwann nicht mehr die Öffnung hintergreift und damit der Einsatz entnommen werden kann.

Zumindest das Halteprofil weist vorzugsweise ferner einen nunmehr zweiten Befestigungsabschnitt auf, an den die Komponente ortsfest anbringbar gestaltet ist. Dies dient der Vormontage der Komponente am Anbringabschnitt, um ein gesamtes Einsatzmodul bilden zu können.

Das vorgenannte Halteprofil ist vorzugsweise aus einem Strangprofil hergestellt. Dies vereinfacht die Herstellung enorm. Zudem ist sie sehr kostengünstig. Strangprofile werden in der Regel als Endlosware hergestellt, beispielsweise gewalzt, und dann einfach gemäß einer gewünschten Länge getrennt bzw. abgeschnitten, also abgelängt.

Alternativ kann das Halteprofil auch mittels Spritzgusses bzw. Extrusion oder Koextrusion hergestellt sein. Dies ist insbesondere sinnvoll, wenn das Halteprofil aus Kunststoff gebildet ist. Die Koextrusion bietet sich an, wenn das Halteprofil Bereiche unterschiedlicher Härte haben soll.

Das ortsfeste Anbringen der Komponente und/oder das ortsfeste Einsetzen des Anbringabschnitts erfolgt vorzugsweise mittels Verrastens und/oder Verklemmens, was eine sehr einfache und wenig fehleranfällige Montage bietet. Insbesondere entfallen zusätzliche Befestigungsmittel und damit verbundene, zusätzliche Montageschritte.

Die Komponente umfasst vorzugsweise einen Rahmen, der in Einschubrichtung des Anbringabschnitts in die vorgenannte Ausnehmung gesehen, ein Betätigungs- oder Anzeigeelement umgibt und zumindest einen Teil der vorgenannten, zweiten Befestigungsvorrichtung der Komponente bildet. Der Rahmen bietet den Vorteil, die Bestandteile des Anbringabschnitts nach außen zu verdecken, die im Betrieb unsichtbar und/oder nicht zugänglich sein sollen. Dies kann beispielhaft den vorgenannten Freigabemechanismus betreffen, wenn die Demontage nur bestimmten Personen erlaubt sein soll. D. h. beispielsweise Einbrechern ist es erschwert, die Art und Weise der Befestigung des Einsatzes zu erkennen. Außerdem können optisch unvorteilhafte Teile optisch verdeckt werden. Vorzugsweise ist eine Komponente als Sicherungsterminal ausgebildet. Eine derartige Komponente umfasst also einen Nottaster mit einem Betätigungsknopf als zumindest ein Betätigungs- oder Anzeigeelement und üblicherweise eine Beleuchtung mit zumindest einem Leuchtmittel, das, in Betätigungsrichtung des Betätigungsknopfes gesehen, neben, hinter oder im Betätigungsknopf angeordnet ist. Im letzten Fall durchleuchtet das zumindest eine Leuchtmittel bei Bestromung den Betätigungsknopf. D. h. der Betätigungskopf ist an einer bzw. mehreren entsprechenden Stellen lichtdurchlässig ausgebildet.

Der Einsatz weist vorzugsweise ferner eine Reflexionsschicht und/oder eine Nachleuchtschicht oder -folie auf. Diese ist bzw. sind angeordnet, von dem zumindest einen Leuchtmittel emittiertes Licht gemäß vorbestimmter Vorgaben zu reflektieren bzw. auszusenden. Die Nachleuchtschicht hat den Vorteil, dass der Nottaster auch bei Stromausfall noch für eine gewisse Zeit be- bzw. hinterleuchtet wird und damit für Personen erkennbar bleibt.

Zudem kann der Einsatz über eine akustische Anzeige verfügen. Diese kann genutzt werden, um beispielsweise ein Notentriegeln akustisch anzuzeigen. Zu diesem Zweck verfügt der Einsatz vorzugsweise ferner über einen Abschnitt, der gestaltet ist, den von der akustischen Anzeige erzeugten Schall entlang eines vorbestimmten Wegs zu leiten. Dies ermöglicht, einen Lautsprecher dieser Anzeige platzgünstig bzw. auch manipulationssicher im Einsatz unterbringen zu können. Alternativ oder zusätzlich kann der Schall nur in bestimmte Richtungen ausgestrahlt werden, beispielsweise entgegen der Betätigungsrichtung.

Vorzugsweise weist diese Komponente ferner eine Nottasterabdeckung auf, die, in Betätigungsrichtung des Betätigungsknopfes gesehen, vor dem Nottaster angeordnet ist. Die Nottasterabdeckung dient der Abdeckung des Betätigungsknopfes, damit dieser nach Betätigung nicht unerlaubterweise wieder zurückgestellt werden kann. Der vorgenannte Rahmen ist also als Nottasterrahmen ausgebildet. Dieser Nottasterrahmen weist einen ersten Führungsabschnitt auf, in dem die Nottasterabdeckung mit einem zweiten Führungsabschnitt in Betätigungsrichtung des Betätigungsknopfes geführt aufgenommen ist. Dies hat den Vorteil, dass die Nottasterabdeckung bei Betätigung, also beim Niederdrücken des Betätigungsknopfes, nicht zerstört wird. Zudem werden etwaige Fehlbedienungen zumindest verringert.

Dieser Rahmen ist vorzugsweise mit einem Seitenrandabschnitt am Anbringabschnitt um eine Achse parallel zu ebenjenem Seitenrandabschnitt drehgelenkig angebracht. Diese Achse verläuft derart, dass der Rahmen vom sonstigen Einsatz weg und somit in Bezug auf den Wandabschnitt herausgeschwenkt werden kann. Der Rahmen steht zudem mit dem Anbringabschnitt oder Wandabschnitt derart in Eingriff, dass das Herausschwenken des Rahmens verhindert ist. Dieser Eingriff ist dabei lösbar gestaltet, sodass nach dem Lösen durch eine berechtigte Person das Herausschwenken des Rahmens ermöglicht ist.

Der Anbringabschnitt weist vorzugsweise eine sich entgegengesetzt zur Einschubrichtung verjüngende Rastnase auf. Der Rahmen weist dementsprechend eine zur Rastnase korrespondierende Rastausnehmung auf, die in Eingriffsstellung von der Rastnase hintergriffen wird. Die Rastnase ist in Richtung Eingriffsstellung federnd gelagert. Der Rahmen weist einen Zugang auf, über den die Rastnase entgegen der Wirkung der federnden Lagerung von der Rastausnehmung weg und damit außer Eingriff mit der Rastausnehmung bewegbar gestaltet ist. Dies ist eine besonders wirksame Möglichkeit, den Anbringabschnitt und somit den gesamten Einsatz einfach lösbar in der Wandabschnittsöffnung zu fixieren.

Zusätzlich oder alternativ kann die Komponente auch als Schlüsselschalter ausgebildet sein. In dem Fall umfasst sie einen Profilzylinder als zumindest ein Betätigungs- oder Anzeigeelement sowie ein den Profilzylinder einfassendes Montageteil. Das Montageteil ist integraler Bestandteil des Rahmens oder von diesem umgeben und ist am vorgenannten Halteprofil befestigt. Es weist erfindungsgemäß zudem einen nunmehr dritten Befestigungsabschnitt auf. Dieser Befestigungsabschnitt erstreckt sich, in Einschubrichtung des Anbringabschnitts in die Wandabschnittausnehmung gesehen, von seiner Rückseite in ebendiese Einschubrichtung und ist am Profilzylinder, vorzugsweise auch am Anbringabschnitt, angebracht. Damit ist der Rahmen weiterhin unabhängig vom hier Profilzylinder befestigt und kann abgenommen werden, um den Einsatz demontieren zu können. Der Einsatz umfasst ferner zumindest einen Schalter, der bei einem Drehen eines Schlüssels im Profilzylinder betätigt wird, womit funktional ein Schlüsselschalter entsteht.

Ein derartiger Einsatz weist vorzugsweise ferner eine Sicherung gegen ein übermäßiges Drehen des Schlüssels bzw. des davon gedrehten Teils des Profilzylinders in zumindest eine Drehrichtung auf. Dies verhindert etwaige Fehlbedienungen bzw. -auslösungen des Schlüsselschalters.

Jeder der vorgenannten Einsätze kann zudem eine Vorrichtung aufweisen, die eingerichtet ist, ein unberechtigtes Lösen oder Entfernen der Komponente oder, wenn vorhanden, des Rahmens, vom Wandabschnitt bzw. vom restlichen Einsatz als Sabotagezustand zu detektieren. Im Fall eines vorhandenen Rahmens kann dieser über eine Schaltfahne verfügen, die im Montagezustand einen im sonstigen Einsatz befestigten Schalter niederdrückt. Wird der Rahmen entfernt, wird der Schalter nicht mehr betätigt, womit detektiert bzw. signalisiert werden kann, dass der Rahmen unerlaubt entfernt bzw. weggeschwenkt wurde. Alternativ kann der Schalter als elektronisches Schaltelement ausgebildet sein, das optisch, magnetisch oder in sonstiger Weise von der Schaltfahne betätigt wird.

Alternativ oder zusätzlich verfügt der Einsatz ferner über eine Demontagesicherung, die gestaltet ist, ein unberechtigtes Lösen oder Entfernen der Komponente selbst oder, wenn vorhanden, des Rahmens, vom Wandabschnitt bzw. vom restlichen Einsatz bis zu einem vorbestimmten Maß zu verhindern. Dies erhöht die Manipulationssicherheit des Einsatzes und damit die Sicherheit insgesamt.

Die Komponente kann zudem an einer den Anzeige- und/oder Betätigungselementen gegenüberliegenden Seite mit zweiten Anzeige- und/ oder Betätigungselementen versehen sein. D. h. es gibt zwei Betätigungs- bzw. Anzeigeseiten des Einsatzes. Demzufolge ist die den Einsatz aufnehmende Ausnehmung des Wandabschnitts durchgehend und ferner so ausgebildet, dass die zweiten Anzeige- und/oder Beleuchtungselemente die Ausnehmung an der dem Einsatz gegenüberliegenden Seite des Wandabschnitts durchgreifen. Dies ermöglicht beispielsweise im Fall des Nottasters, auf der dem Betätigungsknopf gegenüberliegenden Seite des Einsatzes eine Anzeige beispielsweise in Form eines Einfahrt-Verbotsschilds (⊝) anzuordnen und im Dunkeln beleuchten zu können, um Personen anzuzeigen, dass die betreffende Tür in Richtung auf diese Anzeige zu nicht passiert werden kann.

In dem Fall verfügt der Einsatz vorzugsweise ferner über Befestigungseinrichtungen, die gestaltet sind, einen zweiten Rahmen von der dem Einsatz gegenüberliegenden Seite des Wandabschnitts her an den Einsatz zu befestigen. Dadurch kann die Außenkontur des Einsatzes bzw. dessen Rahmens auf beiden Seiten des Wandabschnitts optisch ähnlich oder gleich ausgebildet werden.

Eine erfindungsgemäße Flügelanlage umfasst zumindest einen Flügel und zumindest einen des vorgenannten Wandabschnitts beispielsweise in Form eines Rahmenprofils. Der Wandabschnitt ist dabei Bestandteil eines Rahmens oder einer Wand, der bzw. die den zumindest einen Flügel umgibt. D. h. der Wandabschnitt kann eine Wand oder ein Rahmenprofil sein, die bzw. das im Falle einer als Türanlage ausgebildeten Flügelanlage deren Durchgang(söffnung) umgibt. Er kann aber auch als Rahmenprofil eines gerahmten oder ungerahmten Flügels, beispielsweise Glasflügels, ausgebildet sein. Dies ist insbesondere günstig, wenn der betreffende Flügel ein Festflügel beispielsweise einer Fassade ist. In dem Fall können bereits bestehende Rahmenprofile genutzt werden. Der Wandabschnitt weist zumindest an einer Außenwand zumindest eine von einer Ausnehmung hinterschnittene Öffnung als vorstehend angegebene Einschuböffnung auf. Die Anlage weist dementsprechend zumindest einen der vorgenannten Einsätze auf, der folglich in eine zugehörige der zumindest einen Ausnehmung im Wandabschnitt ortsfest eingesetzt ist. Mit der Erfindung ergibt sich somit eine optisch unauffällige Lösung insbesondere für bestehende Flügelanlagen. Im Fall eines innen hohlen Rahmenprofils, also Hohlprofils, stellt der innere Hohlraum im Rahmen der Erfindung zugleich die Ausnehmung dar, und die jeweilige Außenwand muss nur noch mit der Einschuböffnung versehen werden, indem sie beispielsweise herausgefräst wird. Damit hinterschneidet der Hohlraum automatisch die jeweiligen Öffnung im Hohlprofil.

Die vorgenannten Einsätze können gemäß einem sehr einfachen Montageverfahren montiert werden: Erstens ist die Komponente am zugehörigen Anbringabschnitt zu befestigen. Danach wird das so gebildete Einsatzmodul einfach in die dafür vorgesehene Öffnung im Wandabschnitt eingeschoben und zugleich fixiert bzw. arretiert, ohne dass zusätzliche Maßnahmen notwendig wären.

Weist der Einsatz das vorgenannte Halteprofil auf, wird das Verfahren um einen Schritt eines Befestigens der Befestigungsteile des Anbringabschnitts am Halteprofil des Anbringabschnitts erweitert. Dieser Schritt erfolgt erfindungsgemäß vor dem Einschieben des Einsatzes in die Ausnehmung des Wandabschnitts. D. h. auch dieses Verfahren umfasst weniger Schritte als beim Stand der Technik.

Ist das Halteprofil zudem als Strangprofil ausgebildet, beinhaltet das Verfahren zusätzliche Schritte, die vor dem Befestigen der Komponente am Anbringabschnitt erfolgen. Ein erster Schritt beinhaltet das vorgenannte Ablängen des Halteprofils gemäß den Abmessungen der zugehörigen Öffnung des Wandabschnitts. Ein zweiter Schritt betrifft das Ausbilden von Befestigungselementen, die eingerichtet sind, ein jeweiliges Befestigungsteil festzuhalten. D. h. es werden beispielsweise Schraublöcher gebohrt, um die Befestigungsteile am Halteprofil anbringen zu können.

Weitere Merkmale und Vorteile der Erfindung ergeben sich aus der nachfolgenden Beschreibung bevorzugter Ausführungsformen. Es zeigen:
- Figur 1: eine Flügelanlage mit zwei Einsätzen gemäß einer Ausführungsform der Erfindung,
- Figur 2: die Einsätze von Figur 1 ohne Rahmenprofil in zwei verschiedenen Ansichten,
- Figur 3: den Anbringabschnitt eines der Einsätze von Figur 1 in verschiedenen Ansichten,
- Figur 4: die Abdeckung des Nottasters von Figur 1 in verschiedenen Ansichten,
- Figur 5: den Schlüsselschalter-Einsatz von Figur 1 in verschiedenen Ansichten,
- Figur 6: den Nottaster von Figur 1 bezüglich der Anbringung des Betätigungsknopfes,
- Figur 7: den Nottaster von Figur 1 in Bezug auf Lichtführung,
- Figur 8: den Nottaster von Figur 1 in Bezug auf eine Platinenbefestigung,
- Figur 9: eine Erweiterung für die Einsätze von Figur 1,
- Figur 10: eine Abwandlung des Schlüsselschalter-Einsatzes von Figur 1,
- Figur 11: eine Abwandlung hinsichtlich der Platinenbefestigung,
- Figur 12: eine Abwandlung der Einsätze von Figur 1 hinsichtlich der Lichtführung,
- Figur 13: Abwandlungen des Schlüsselschalter-Einsatzes von Figur 1,
- Figur 14: einen Einsatz gemäß einer dritten Ausführungsform der Erfindung,
- Figur 15: einen Nottaster-Einsatz gemäß einer Ausführungsform der Erfindung,
- Figur 16: zwei Varianten der Befestigung von Lichtleitteilen am Halteprofil eines erfindungsgemäßen Einsatzes,
- Figur 17: einen Schlüsselschalter-Einsatz gemäß einer Ausführungsform der Erfindung,
- Figur 18: einen Nottaster-Einsatz gemäß einer Ausführungsform der Erfindung,
- Figur 19: ein Montageverfahren gemäß einer ersten Ausführungsform der Erfindung,
- Figur 20: ein Montageverfahren gemäß einer zweiten Ausführungsform der Erfindung und
- Figur 21: ein Montageverfahren gemäß einer dritten Ausführungsform der Erfindung.

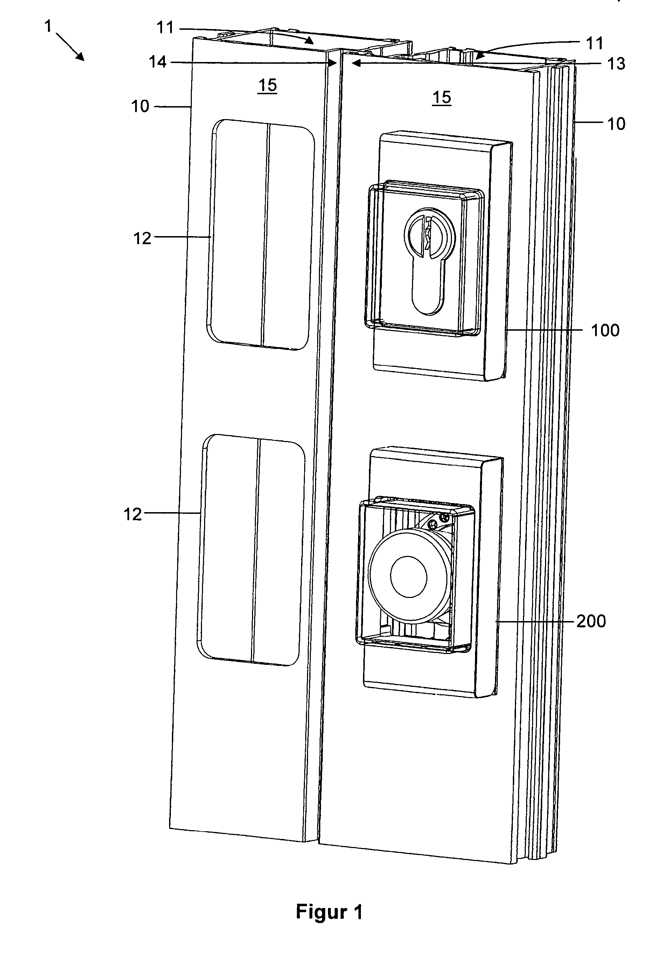

Figur 1 zeigt ausschnittsweise eine Flügelanlage 1. Es sind zwei Rahmenprofile 10 gezeigt, die Teile exemplarisch zweier Türflügel sind. Das linke Rahmenprofil 10 umfasst einen Türfalz 14, der im dargestellten Geschlossenzustand der Türflügelanlage 1 vom rechten Rahmenprofil 10 bzw. dessen Türfalz 13 überfälzt wird. Beispielhaft jedes Rahmenprofil 10 ist innen hohl ausgebildet, weist also inwendig eine Ausnehmung in Form eines Hohlraums 11 auf. Vorzugsweise jedes Rahmenprofil 10 weist an seiner hier nach vorne weisenden Außenwand 15 jeweils zwei Öffnungen 12 auf, von denen nur die Öffnungen 12 des linken Rahmenprofils 10 zu erkennen sind.

In die rechten Öffnungen 12 sind ein Schlüsselschalter-Einsatz 100 bzw. ein Nottaster-Einsatz 200 eingesetzt.

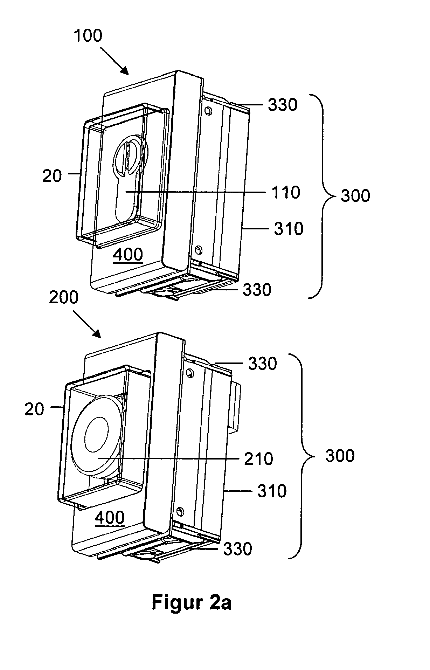

Figur 2a zeigt die Einsätze 100, 200 ohne Rahmenprofil 10. Jeder Einsatz 100, 200 umfasst einen Anbringabschnitt 300, mittels dessen der jeweilige Einsatz 100, 200 in die jeweils zugehörige Öffnung 12 eingesetzt und an dieser fixiert ist. Jeder Anbringabschnitt 300 umfasst im Wesentlichen ein Halteteil 310, an den seitlich zwei Seitenteile 330 angebracht sind. Nach vorne schließt sich an den jeweiligen Anbringabschnitt 300 ein Rahmen 400 an, der ein jeweiliges Anzeige- bzw. Betätigungselement in Form eines Profilzylinders 110 bzw. Betätigungsknopfes 210 umgibt. Die letztgenannten Elemente sind vorderseitig von einer jeweiligen Abdeckung 20 in Richtung Person bzw. Nutzer optisch abgedeckt und/oder mechanisch geschützt.

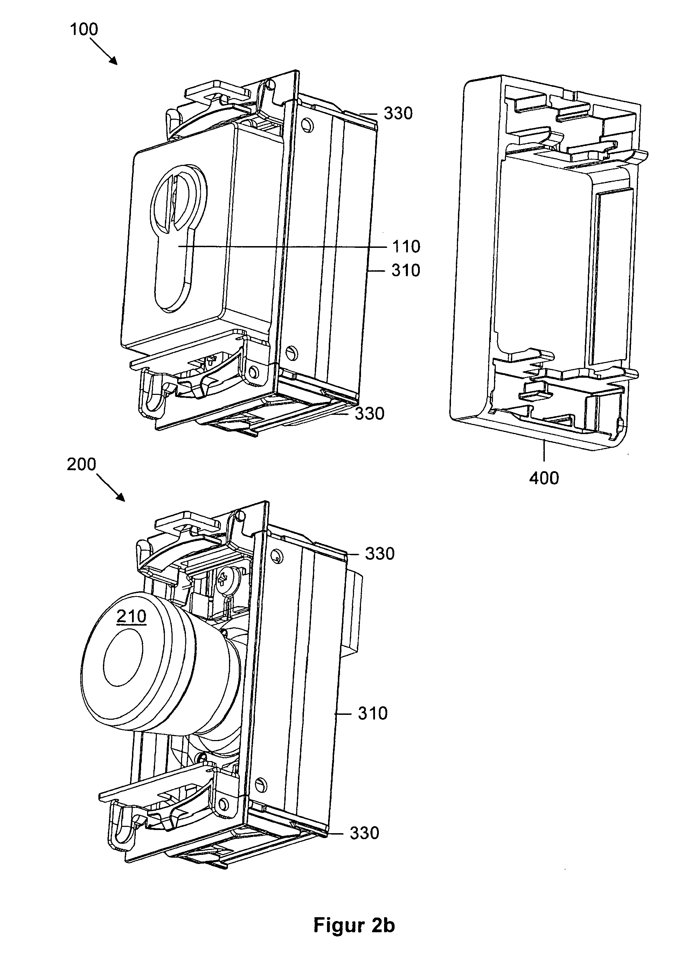

Figur 2b zeigt die Einsätze 100, 200 ohne Abdeckung 20. Beim Nottaster-Einsatz 200 fehlt zudem der Rahmen 400. Hier ist besonders gut zu erkennen, dass die Seitenteile 330 am Halteteil 310 angeordnet bzw. angebracht sind. Weiterhin sind der Profilzylinder 110 und der Betätigungsknopf 210 zu erkennen.

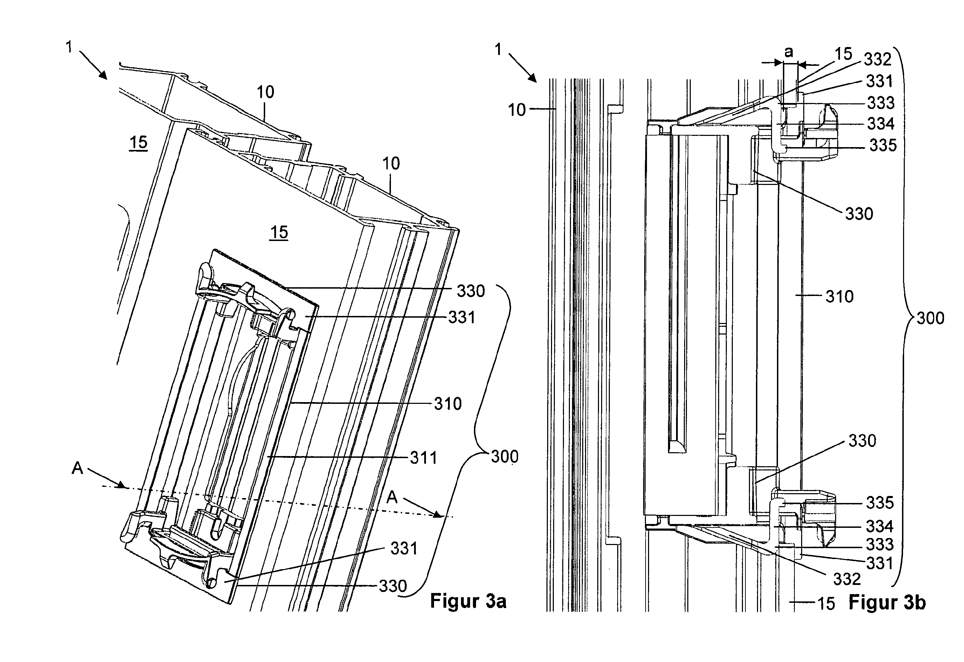

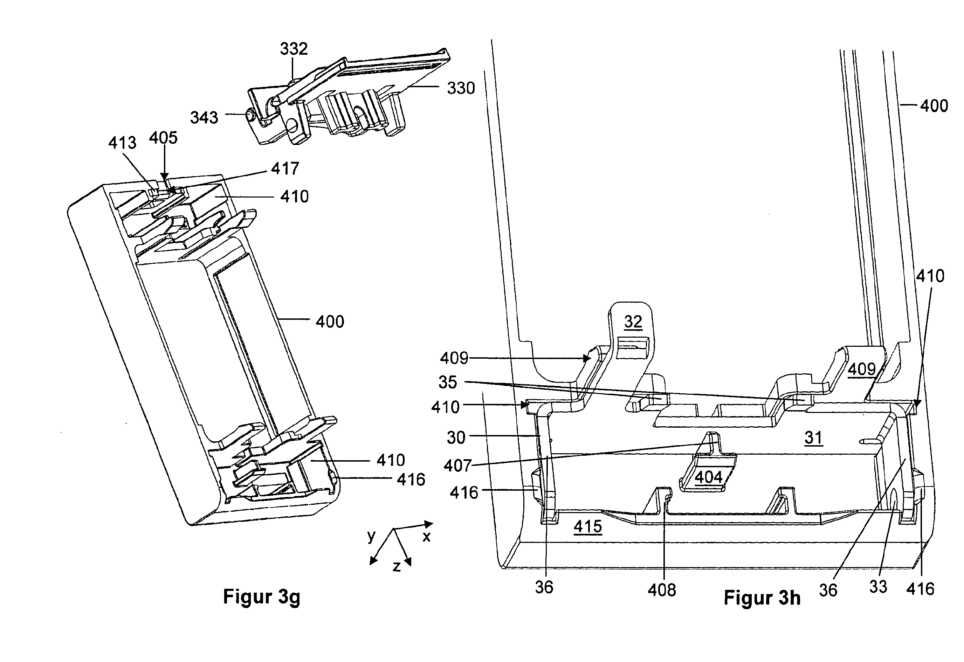

Figur 3a zeigt die Anlage 1 von Figur 1 im Ausschnitt ohne Profilzylinder 110, Abdeckung 20 und Rahmen 400. D. h. hier ist nur der Anbringabschnitt 300 des Schlüsselschalter-Einsatzes 100 abgebildet. Der Anbringabschnitt 300 dient, wie der Name sagt, dem Anbringen des hier Schlüsselschalter-Einsatzes 100 am hier rechten Rahmenprofil 10. Wie zu erkennen, liegen das Halteteil 310 und die oben und unten angesetzten Seitenteile 330 mit ihren Auflageabschnitten 311 bzw. 331 auf der die nicht sichtbare Öffnung 12 umgebenden Außenwand 15 des hier rechten Rahmenprofils 10 auf.

Figur 3b ist eine Schnittansicht entlang einer Linie A - A in Figur 3a. Es ist somit das rechte Rahmenprofil 10 zu erkennen, dessen Außenwand 15 hier durch den Anbringabschnitt 300 unterbrochen ist. Das Halteteil 310 ist, wie später näher erläutert, an den Seitenteilen 330 befestigt. Jedes Seitenteil 330 weist an seiner der jeweiligen Außenwand 15 zugewandten Seite neben dem Auflageabschnitt 331 einen Rasthaken 332 auf. Dieser ist an das sonstige Seitenteil 330 angeformt und erstreckt sich zunächst derart in Richtung unmittelbar benachbarter, gegenüberliegender Außenwand 15, dass er mit eben jener Außenwand 15 einen stumpfen Winkel einschließt. Daraufhin knickt der Rasthaken 332 in einem spitzen Winkel auf das Halteteil 310 zu ab und geht in einen Freigabeabschnitt 334 über. Die Freigabeabschnitt 334 erstreckt sich im Wesentlichen parallel zur Außenwand 15 des Rahmenprofils 10. Der Abknickbereich des Rasthakens 332 bildet einen Rast-/Klemmabschnitt 333. Dieser Abschnitt 333 und vorzugsweise auch der Freigabeabschnitt 334 weisen zum unmittelbar benachbarten Auflageabschnitt 331 einen derartigen Abstand a auf, dass im somit gebildeten Zwischenraum die jeweils zugehörige Außenwand 15 des Rahmenprofils 10 eingeklemmt ist. Dies wird dadurch unterstützt, dass der Rasthaken 332 vorzugsweise federnd ausgebildet ist, also von der jeweils zugehörigen Außenwand 15 weggeschenkt werden kann. Die Schwenkachse des Rasthakens befindet sich dabei im Anformungsbereich des Rasthakens 332 am sonstigen Seitenteil 330, hier also am linken Ende.

Vorzugsweise ist der Auflageabschnitt 331 in seinem der zugehörigen Au-βenwand 15 zugewandten Ende stufenartig ausgebildet, so dass das Seitenteil 330 in Verbindung mit dem Halteteil 310 und dem anderen Seitenteil 330 hier nicht oder nur sehr geringfügig nach oben oder unten im Rahmenprofil 10 bewegt werden kann. Jeder Freigabeabschnitt 334 mündet an seinem freien Ende in einen jeweiligen Vorsprung 335, der sich vorzugsweise in einem Winkel von etwa 90° vom Freigabeabschnitt 334 in Richtung Außenwand 15 erstreckt. Dessen Funktion wird insbesondere in Verbindung mit Figur 3b deutlich. Möchte eine Person den Einsatz 100, 200 bzw. dessen zugehörigen Anbringabschnitt 300 aus dem Rahmenprofil 10 entnehmen, muss die Klemmung zwischen Seitenteilen 330 und Au-βenwand 15 aufgehoben werden. Dazu wird in etwa horizontal nach links in Figur 3b ein entsprechendes Werkzeug beispielsweise in Form eines Schraubendrehers im Fall des unteren Seitenteils 330 unterhalb des Vorsprungs 335 in Richtung Freigabeabschnitt 334 bewegt. Wird der Schraubendreher so gegen den Freigabeabschnitt 334 gedrückt, dass dieser nach links weggedrängt wird, bewirkt dies aufgrund des formstabilen Ausbildens des Rast-/Klemmabschnitts 333, dass der Rasthaken 332 bzw. dessen Freigabeabschnitt 334 in Richtung Halteteil 310, im Fall des unteren Seitenteils 330 entgegen dem Uhrzeigersinn, weggeschenkt wird. Dies hat zur Folge, dass der Schraubendreher droht, am Freigabeabschnitt 334 bzw. vom Rast- bzw. Klemmabschnitt 333 abzurutschen. Der Vorsprung 335 verhindert gerade dies, so dass das Seitenteil 330 sicher außer Eingriff mit dem Rahmenprofil 10 bzw. dessen Außenwand 15 gebracht und damit entnommen werden kann.

Beim Einsetzen des Anbringabschnitts 300 in das Rahmenprofil 10 bzw. dessen Öffnung 12 geschieht folgendes: Der Abschnitt 300 wird nach links in Figur 3b in die zugehörige Öffnung 12 geschoben. Die Rasthaken 332 der Seitenteile 330 werden aufeinander zu geschwenkt, wenn sie an der zugehörigen Außenwand 15 des Rahmenprofils vorbei bewegt werden. Haben Sie die jeweilige Außenwand 15 überwunden, schnappen Sie aufgrund der federnden Lagerung zurück und nehmen die in Figur 3b gezeigte Stellung ein. In den Moment kommen die Auflageabschnitte 311, 331 auf der dem Rast-/Klemmabschnitt 333 abgewandten Fläche der zugehörigen Außenwand 15 zu liegen. Damit ist die Außenwand 15 sicher im jeweiligen Seitenteil 330 eingeklemmt, und damit ist der gesamte Anbringabschnitt 300 sicher in der Öffnung 12 gehalten.

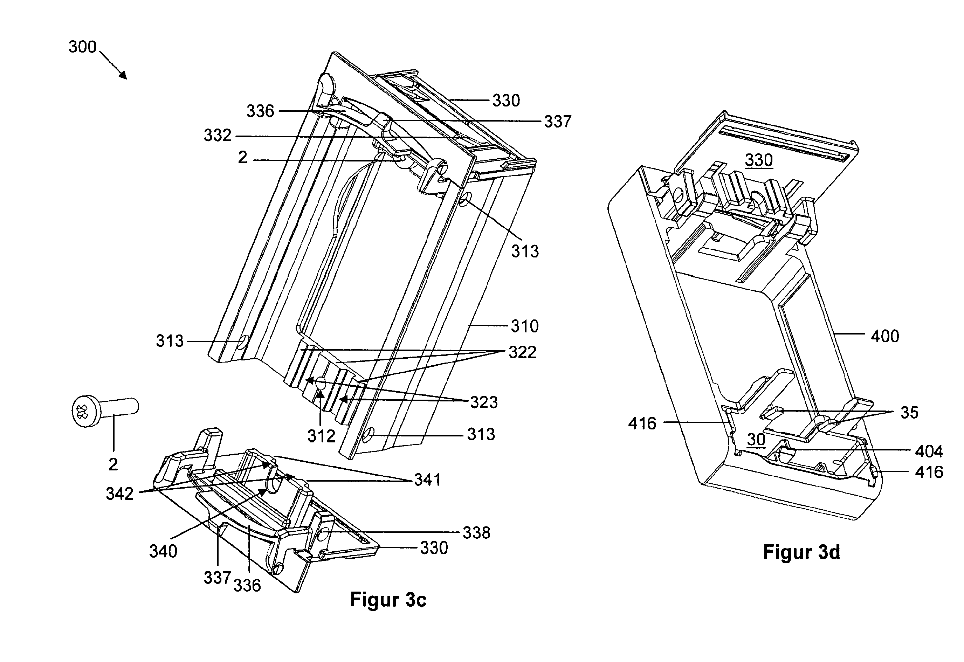

Figur 3c zeigt den Anbringabschnitt 300 in einer teilweisen Explosionsansicht. Das obere Seitenteil 330 ist am Halteteil 310 befestigt, während das untere Seitenteil 330 vom Halteteil 310 gelöst dargestellt ist. Zum Befestigen des jeweiligen Seitenteils 330 am Halteteil 310 weist dieses Befestigungsöffnungen 313 auf. Jedes Seitenteil 330 weist an korrespondierenden Stellen Vorsprünge in Form von Rastköpfen 338 auf, die sich in Richtung Halteteil 310 verjüngen. Dadurch ist es möglich, das jeweilige Seitenteil 330 stirnseitig auf das Halteteil 310 aufschieben zu können und dann mittels der hier jeweils zwei Rastköpfe 338 zu arretieren.

Um das Aufschieben zu erleichtern, weisen das Halteteil 310 und die Seitenteile 330 jeweilige Führungsabschnitte auf. Das Halteteil 310 weist zumindest stirnseitig Führungsvorsprünge 322 auf, zwischen denen Führungsnuten 323 ausgebildet sind. Dementsprechend umfasst das Seitenteil 330 Führungsvorsprünge 341, zwischen denen entsprechend jeweils eine Führungsnut 342 ausgebildet ist. Die Vorsprünge 322, 341 und Nuten 323, 342 erstrecken sich parallel zueinander in Aufschieberichtung des Seitenteils 330.

Und sicher gewährleisten zu können, dass sich Halteteil 310 und Seitenteile 330 nicht mehr voneinander lösen können, weisen beide Teile hier im Bereich des mittleren Führungsvorsprungs 322 bzw. der Führungsnut 342 ferner eine Befestigungsöffnung 312 bzw. Befestigungsausnehmung 340 auf, durch die eine Schraube 2 entweder mit dem Halteteil 310 selbst oder einer dahinter angeordneten Mutter verschraubt ist.

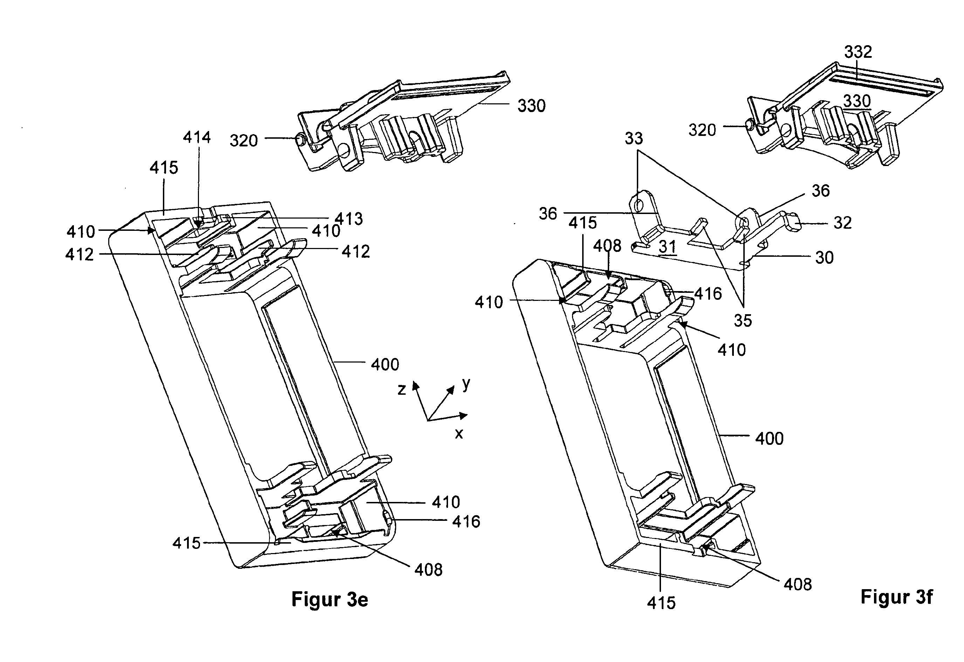

Figur 3d und Figur 3e zeigen den Rahmen 400 in Verbindung mit einem an einer ersten Seite angebrachten Seitenteil 330, einmal in Montageansicht und einmal in Explosionsansicht. Figur 3f und Figur 3g hingegen zeigen den Rahmen 400 in Verbindung mit einem an der entgegengesetzten Seite angebrachten Seitenteil 330 jeweils in Explosionsansicht.

Der Rahmen 400 ist vorderseitig auf das Seitenteil 330 gemäß Figur 3d und Figur 3e aufgeschoben. Dazu weist der Rahmen 400 inwendig an entsprechenden Stellen vorzugsweise nutenartige Führungs-Ausnehmungen 410 auf. In diese greifen korrespondierende Führungsvorsprünge 343 des jeweiligen Seitenteils 330 ein, von denen nur einer sichtbar ist.

Um zu verhindern, dass sich der Rahmen 400 von sich aus vom jeweiligen Seitenteil 330 löst, ist hier ein Rastmechanismus vorgesehen. Dazu weist vorzugsweise jedes Seitenteil 330 an seiner dem Rahmen 400 zugewandten Seite einen sich im Wesentlichen quer zur Einschubrichtung hervorstehenden, federnden Vorsprung 336 auf, an dessen freien Ende ein Rastkopf 337 ausgebildet ist. Der Rastkopf 337 erstreckt sich beispielhaft in Richtung jeweils unmittelbar gegenüberliegender Außenwand 415 des Rahmens 400.

Für diese weist der Rahmen 400 einen im Querschnitt C-förmigen Einschubabschnitt mit einer Einschubausnehmung 408 auf, in die eine hier quader- oder scheibenförmige Rastplatte 413 mit einer hier mittig ausgebildeten Rastausnehmung 414 eingeschoben ist. Die Rastausnehmung 414 erstreckt sich in Richtung Rastkopf 337. Der Rastkopf 337 verjüngt sich in Richtung Rahmen 400 von ebenjener Rastplatte 413 weg. Beim Aufschieben des Rahmens 400 auf das Seitenteil 330 wird dadurch der Rastkopf 337 vom Rahmen 400 zunächst von der Rastplatte 413 weg gedrückt. Sobald der Rastkopf 337 die Rastausnehmung 414 erreicht hat, schnappt er in diese ein und hintergreift sie. Damit ist der Rahmen 400 sicher am Seitenteil 330 gehalten.

Wie in Bezug auf Figur 3b angegeben, muss zum Demontieren des Anbringabschnitts 300 vom Rahmenprofil 10 der Rast-/Klemmabschnitt 333 zumindest eines Seitenteils 330 von der anliegenden Außenwand 15 weg bewegt werden. Dies geschieht, indem der Rast-/Klemmabschnitt 333 in Richtung Innenraum des Rahmens 400 geschwenkt wird. Um zu vermeiden, dass dies geschieht, wenn der Rahmen 400 aufgesetzt ist, bietet dieser vorzugsweise eine Demontagesicherung. Diese ist mittels hier zweier Stege 412 gebildet.

Die Stege 412 erstrecken sich in Einschubrichtung des Seitenteils 330 und sind so ausgebildet, dass der Rast-/Klemmabschnitt 333 des zugehörigen Seitenteils 330 auf ihnen zu liegen kommt, und zwar auf deren dem hier oberen Rand des Rahmens 400 zugewandten Flächen. Die Stege 412 sind formstabil ausgebildet. Dadurch ist es bei aufgesetztem Rahmen 400 nahezu unmöglich, den Rast-/Klemmabschnitt 333 in Demontagerichtung wegzudrücken, ohne die Stege 412 zu beschädigen oder abzubrechen. Dies erhöht die Manipulationssicherheit des gesamten Einsatzes 100, 200.

Für die Anordnung gemäß Figur 3f bis Figur 3h, also für die andere Stirnseite des Rahmens 400, weist dieser zwar auch eine Einschubausnehmung 410 auf, allerdings wird sie anders genutzt. Zudem fehlen hier exemplarisch die Stege 412. Stattdessen ist hier ein Lagerteil 30 in den Rahmen 400 von seiner Rückseite her eingeschoben und beispielsweise mittels Verklemmens im Rahmen 400 fixiert. Dazu weist der Rahmen 400 zwei einander gegenüberliegende und einander zugewandte Einschubausnehmungen 410 auf, in die das Lagerteil 30 mit seinem hier plattenartigen Einschubabschnitt 31 eingeschoben ist.

Ferner kann der Rahmen 400 über eine zusätzliche Führung hier in Form eines in etwa mittig angeordneten Vorsprungs 404 verfügen, der mit einem Führungsvorsprung 407 zu einer gegenüberliegenden, nicht bezeichneten Wandung des Rahmens 400 einen Abstand von etwa der Abmessung des Einschubabschnitts 31 in diesem Bereich aufweist. Damit ist das Lagerteil 30 sicher im Rahmen 400 gehalten.

Um das Lagerteil 30 noch weiter zu sichern, weist der Rahmen 400 an seiner Rückseite alternativ oder zusätzlich Rastvorsprünge 416 auf, die korrespondierende, zur Rückseite des Rahmens 400 hin weisende Flächen 36 rastend hintergreifen.

Die Funktion der hier fehlenden Stege 412 übernehmen zwei am Lagerteil 30 angeformte Vorsprünge 35.

Das zugehörige Seitenteil 330 ist über Zapfen 343 in korrespondierenden Drehlagern 33 des Lagerteils 30 frei rotierbar aufgenommen. Damit ist es möglich, den Rahmen 400 vom nicht abgebildeten Rahmenprofil 10 nach außen und vorzugsweise unten in Figur 1 weg schwenken zu können. Das in Figur 3d und Figur 3e gezeigte, andere Seitenteil 330 verhindert dies mittels des vorbeschriebenen Rasteingriffs mit der Rastplatte 413.

Um zu erkennen, wenn der Rahmen 400 (unerlaubterweise) weg geschwenkt wurde und damit ein Einbruchsversuch einhergehen könnte, ist vorzugsweise am Lagerteil 30 ein Schaltabschnitt 32 hier in Form eines L-förmigen Vorsprungs ausgebildet. Wird der Rahmen 400 weg geschwenkt, entfernt sich damit der Schaltabschnitt 32 vom sonstigen Einsatz 100, 200, insbesondere vom hier nicht dargestellten Halteteil 310. Dies wird sich zunutze gemacht, indem der Schaltabschnitt 32 im Montagezustand gegen einen später näher erläuterten Sabotageschalter 46 gedrückt wird und diesen betätigt. Entfernt sich der Schaltabschnitt 32, wird die Betätigung des Sabotageschalters 46 aufgehoben, und dies kann elektrisch als Einbruchsversuch detektiert werden. D. h. mit einfachen Mitteln ist eine wirksame Sabotagedetektion möglich.

Der Rahmen 400 weist oberhalb der Rastplatte 413 rückseitig eine Ausnehmung 405 auf, die hier mit einer Ausnehmung 417 der Rastplatte 413 fluchtet. Alternativ ist die Rastplatte 413 soweit in den Rahmen 400 geschoben, dass sie bündig mit der Ausnehmung 405 ist oder sogar tiefer liegt als diese. Im Montagezustand ist der Rastkopf 337 oder der federnde Vorsprung 336 unterhalb der Rastplatte 413 im Inneren des Rahmens 400 angeordnet. Die Ausnehmung 405 und die Rastplatte 413 geben einen Weg zu ebenjenem Vorsprung 336 bzw. Rastkopf 337 frei. Dadurch kann ein geeignetes Werkzeug durch die Ausnehmung 405 und die Ausnehmung 417 oder an ihr vorbei gegen den Vorsprung 336 bzw. den Rastkopf 337 bewegt und dieser vom gegenüberliegenden Rand der Öffnung 12 weg gedrückt werden. Dadurch gelangt der Rastkopf 337 außer Eingriff mit der Öffnung 12. Der Rahmen 400 kann dadurch an dieser Stelle von der Öffnung 12 weg bewegt werden. Es handelt sich also um eine Demontagevorrichtung für den Rahmen 400.

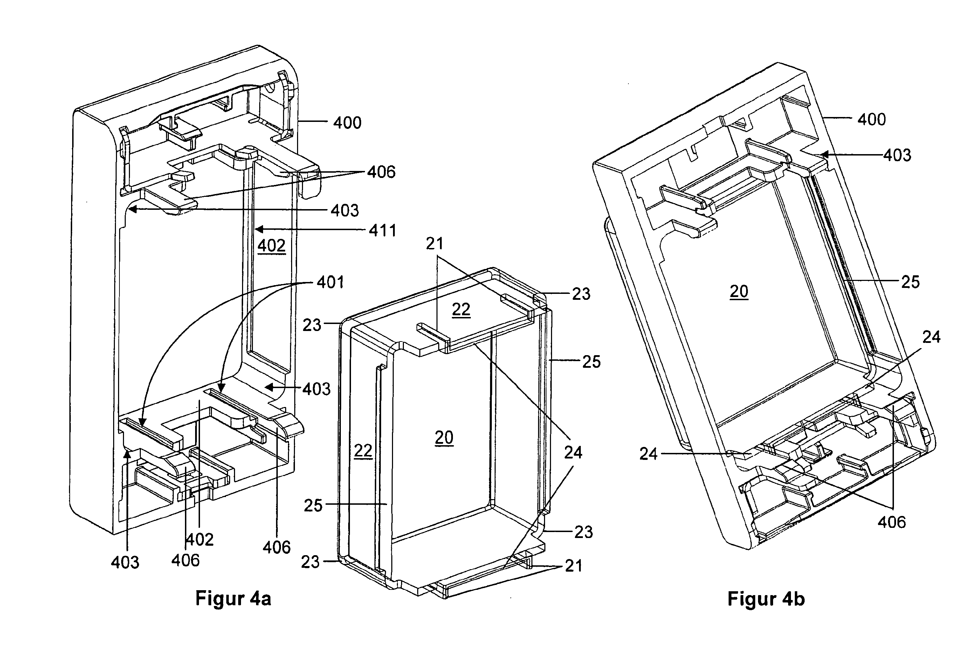

Figur 4 zeigt die Anbringung der Abdeckung 20 am Rahmen 400. Wie die teilweise Explosionsansicht in Figur 4a vermuten lässt, wird die Abdeckung 20 rückseitig in den Rahmen 400 eingeschoben. D. h. die Abdeckung 20 kann nach vorn in Figur 1 nicht zerstörungsfrei aus dem Rahmen 400 entnommen werden. Zu diesem Zweck weist die Abdeckung 20 hier an einer oberen und unteren Fläche 22 jeweils zwei Führungsvorsprünge 21 auf, die sich hier von der Rückseite der Abdeckung 20 in Einschieberichtung erstrecken, allerdings nicht bis zur hier hinten angeordneten Vorderseite der Abdeckung 20. Der Rahmen 400 weist an korrespondierenden Stellen Führungsnuten 401 auf, die hier kurz vor dem hinteren Rand des Rahmens 400 enden. Dadurch ist das Herausbewegen der Abdeckung 20 hier nach hinten begrenzt. Dabei übernehmen die hier vier Außenflächen 22 und die gegenüberliegenden Innenflächen 402 des Rahmens 400 eine Führung zum Einschieben der Abdeckung 20 in den Rahmen 400.

Zusätzlich oder alternativ ist die Abdeckung 20 über jeweils zwei Flächen 22 verbindende Eckrandbereiche 23 in korrespondierenden, jeweils zwei Flächen 402 verbindenden Inneneckbereichen 403 geführt.

Zusätzlich oder alternativ sind als Bewegungsbegrenzung der Abdeckung 20 im Rahmen 400 analog zum Halteteil 310 hier seitlich angeordnete Auflageabschnitte 25 ausgebildet, die an korrespondierenden Anschlagflächen 411 des Rahmens 400 zu liegen kommen, wenn die Bewegungsgrenze erreicht ist.

Um auch eine Bewegungsbegrenzung in die entgegengesetzte Richtung, also entgegengesetzt zur Einschieberichtung der Abdeckung 20 in den Rahmen 400, zu realisieren, gibt es hier vier, einander zugewandte Rastvorsprünge 406. Diese sind hier im Querschnitt dreieckförmig gestaltet und erlauben aufgrund ihrer vorzugsweise federnden Lagerung ein Überfahren durch die Abdeckung 20 bzw. deren entsprechende Führungsflächen 22. Dabei werden die Rastvorsprünge 406 kurzzeitig auseinander gedrückt. Nach dem Einschieben kann die Abdeckung 20 nur soweit in den Rahmen 400 hinein, also entgegengesetzt zu ihrer Einschubrichtung, ohne Widerstand bewegt werden, bis in diese Richtung weisende Anschlagflächen 24 der Abdeckung 20 gegen einen jeweiligen Rastvorsprung 406 stößt. Nur wenn dessen Rückhaltekraft überwunden wird, kann die Abdeckung 20 wieder vom Rahmen 400 gelöst werden.

Im Falle eines Nottaster-Einsatzes 100 ist die Abdeckung 20 vorzugsweise aus transparentem Material gebildet. Weiter vorzugsweise sind die Flächen 22 milchglasartig gestaltet, sodass das Licht einer etwaig vorhandenen Beleuchtung diffus im Raum verteilt wird. Es entsteht somit der Eindruck einer beleuchteten Fläche, was das Auffinden des Nottasters im (Halb-)Dunkeln erleichtert.

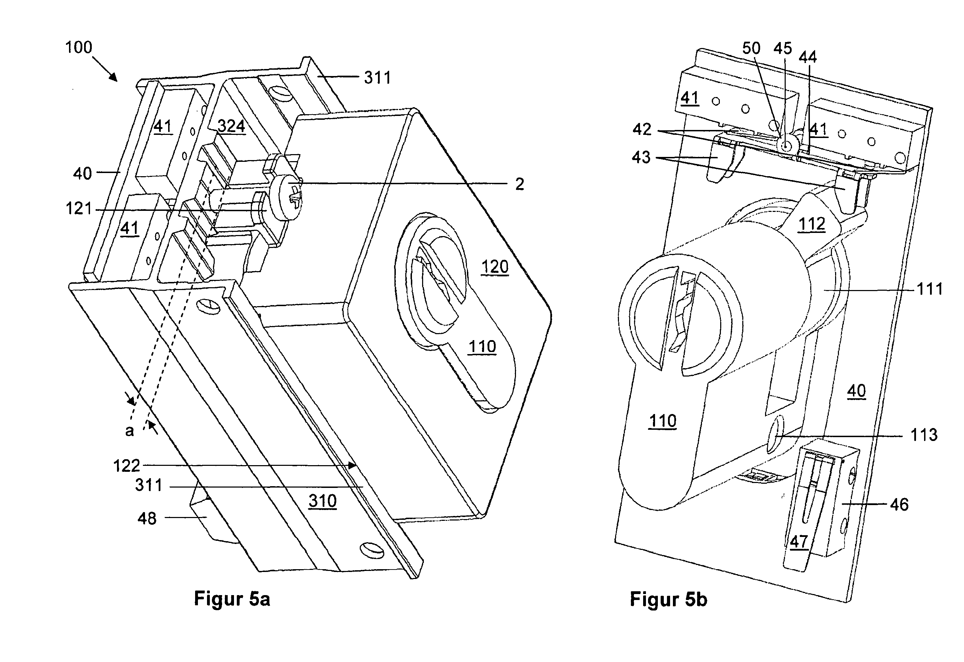

Figur 5a zeigt den Einsatz 100 ohne Seitenteile 330 und Rahmen 400. Der Profilzylinder 110 ist von einem anderen Rahmen 120 umgeben, der seinerseits vom nicht abgebildeten Rahmen 400 umgeben ist. Der Rahmen 120 liegt hier mit seitlich ausgebildeten, in Richtung Halteteil 310 weisenden, eckförmigen Aussparungen auf ihnen zugewandten Flächen vorteilhafterweise der Aufliegeabschnitte 311 des Halteteils 310 auf. Die dem Halteteil 310 zugewandten Flächen dieser Aussparungen bilden somit einen Aufnahmeabschnitt 122 für den Rahmen 120 und dienen somit der Positionsfixierung des Rahmens 120 in Bezug auf das Halteteil 310.

In stirnseitigen Bereichen verfügt der Rahmen 120 über Befestigungsabschnitte 121. Die Befestigungsabschnitte 121 sind hier mittels eines pfostenartigen Vorsprungs mit einer Schrauböffnung ausgebildet. Zwischen dem Befestigungsabschnitt 121 und dem Halteteil 310 (Bezugszeichen b) ist das hier nicht sichtbare Seitenteil 330 mit dem vorbeschriebenen Führungsabschnitt inkl. Befestigungsöffnung 312 angeordnet. Die Schraube 2 ist durch diese Befestigungsöffnung 312 hindurchgeführt und beispielsweise mit dem Halteteil 310 verschraubt. D. h. die Schrauben 2, von denen die vordere sichtbar ist, fixieren den Rahmen 120 und eines der Seitenteile 330 am Halteteil 310.

Das Halteteil 310 ist im Querschnitt vorzugsweise H-förmig ausgebildet, weist also einen Mittelsteg 324 auf. Aus Sicht des Rahmens 120 unterhalb des Mittelstegs 324 ist eine Platine 40 angeordnet, auf der unter anderem hier zwei Schalter 41 und ein Anschlussteil 48 angeordnet sind.

Figur 5b zeigt den Profilzylinder 110 in Verbindung mit der Platine 40 näher im Detail. Der Profilzylinder 110 weist ein Betätigungsteil 111 auf, das bei einem Drehen eines Schlüssels im Profilzylinder 110 mitgedreht wird. Außenseitig weist der Betätigungsabschnitt 111 einen radial hervorstehenden Vorsprung 112 auf. Dieser ist so angeordnet, dass er einen der Schalter 41 betätigen kann. Im gezeigten Beispiel kann der rechte Schalter 41 bei Betätigung ein Verriegeln eines angeschlossenen Flügels bewirken, wohingegen die Betätigung des linken Schalters 41 ein Entriegeln und ggf. Aufheben eines Alarms bewirkt. Daher darf zu einem Zeitpunkt nur einer der Schalter 41 betätigt sein.

Zu diesem Zweck ist eine etwa mittig auf einer Lagerachse 45 frei rotierbar gelagerte Schaltwippe 44 vorgesehen. Die Schaltwippe 44 verfügt beiderends über in Richtung Profilzylinder 110 hervorstehende Betätigungsvorsprünge 43. Gelangt der Betätigungsvorsprung 112 des Profilzylinders 110 in den Bereich eines der Vorsprünge 43, drückt er beim Weiterbewegen diesen von sich weg gegen eine Schaltfahne 42 des Schalters 41, womit das gewünschte Schaltverhalten hervorgerufen wird. Damit sich die Schaltwippe 44 nicht von der Lagerachse 45 lösen kann, ist auf das freie Ende der Lagerachse 45 eine Sicherung 50 hier in Form eines O-Rings aufgesetzt. Andere geeignete Sicherungen ist ein Sprengring, eine Mutter oder ein Klemmsitz der Schaltwippe auf der Lagerachse 45.

Rechts unten ist der vorgenannte Sabotageschalter 46 vorzugsweise in Form eines als Öffner ausgebildeten Tastschalters angeordnet. An seiner dem nicht dargestellten Rahmen 400 zugewandten Seite ist der Schalter 46 mit einer schwenkbar gelagerten Schaltfahne 47 versehen. Ist der Rahmen 400 montiert, drückt der Schaltabschnitt 32 des Lagerteils 30 gegen die Schaltfahne 47 und betätigt den Schalter 46. Wird der Rahmen 400 weg geschwenkt, entfernt sich der Schaltabschnitt 32 von der Schaltfahne 47, und der Schalter 46 ist nicht mehr betätigt. Im Falle eines Öffners schließt sich damit der durch den Schalter 46 sonst geöffnete Stromkreis, und es kann beispielsweise ein Alarm ausgelöst werden. Damit ist eine sehr einfach aufgebaute und wirksame Sabotagedetektion realisiert. Der Schalter 46 kann selbstredend in jeder anderen Form, beispielsweise als Schließer, opto-elektronischer, magentischer oder sonst wie ausgebildeter Schalter realisiert sein.

Eine Alternative betreffend die Wirkung der Schalter 41 kann darin bestehen, dass ein Schalter 41 zum Verriegeln eines zu verriegelnden (Tür-)Flügels dient. Der andere Schalter 41 hingegen hat die Funktion einer Alarmquittierung, also eines Abschaltens eines etwaigen Alarms, verbunden mit einer der drei Funktionen: Kurzzeit-Auf, Langzeit-Auf und Dauerauf. Diese Funktionen können in Abhängigkeit der Dauer der Schalterbetätigung geschaltet werden.

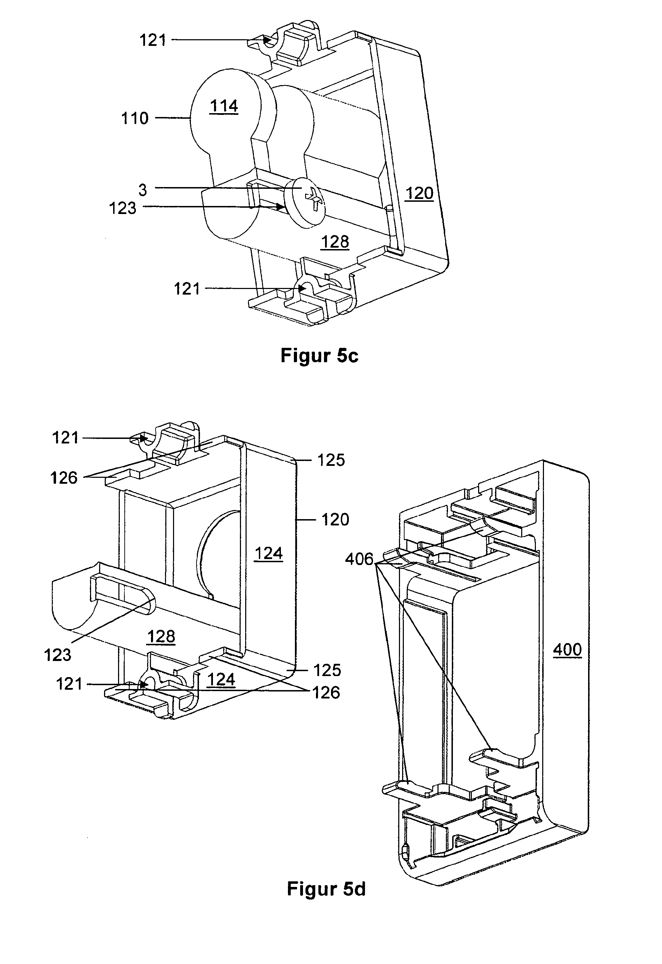

Figur 5c zeigt den Rahmen 120 von der Rückseite und mit montiertem Profilzylinder 110. Der Rahmen 120 weist einen sich zur Rückseite hin erstreckenden Vorsprung als Aufnahmeabschnitt 128 für den Profilzylinder 110 auf. Der Vorsprung ist im Querschnitt etwa halbkreisförmig ausgebildet, innen hohl, zum Profilzylinder 120 hin offen und an seiner dem sonstigen Rahmen 120 abgewandten Seite geschlossen. Damit bildet sich ein wannenartiger Aufnahmeabschnitt 128 für den aufzunehmenden Teil des Profilzylinders 110. Der Aufnahmeabschnitt 128 umfasst ferner eine hier langlochartige Befestigungsöffnung 123. Eine Schraube 3 ist von einer Außenseite des Aufnahmeabschnitts 128 durch die Befestigungsöffnung 123 hindurch mit dem Profilzylinder 110 verschraubt und fixiert so den Profilzylinder 110 am Rahmen 120 bzw. dessen Aufnahmeabschnitt 128. Dazu weist der Profilzylinder 110 eine vorzugsweise mit Innengewinde versehene Befestigungsöffnung 113 auf. Das Langloch dient dem Zweck, die Position des Profilzylinders 110 in Bezug auf den Rahmen 120 einstellen zu können. Die nach hinten weisende Fläche 114 des Profilzylinders 110 bestimmt die maximale Einsetztiefe des Profilzylinders 110 in Bezug auf die hier nach hinten weisende Fläche des Rahmens 120.

Figur 5d zeigt ausschließlich die Rahmen 120, 400, und zwar in Explosionsansicht. Abgesehen von den Befestigungsabschnitten 121 ist der Rahmen 120, in Einschubrichtung gesehen, außen vorzugsweise wie die Abdeckung 20 geformt. D. h. der Rahmen 120 verfügt analog zu den Führungsflächen 22, Führungsecken 23 und den Anschlagflächen 24 der Abdeckung 20 über Führungsflächen 124 und/oder Führungsecken 125 und Anschlagflächen 126, die mit dem Rahmen 400 und insbesondere dessen Rastvorsprüngen 406 zusammenwirken.

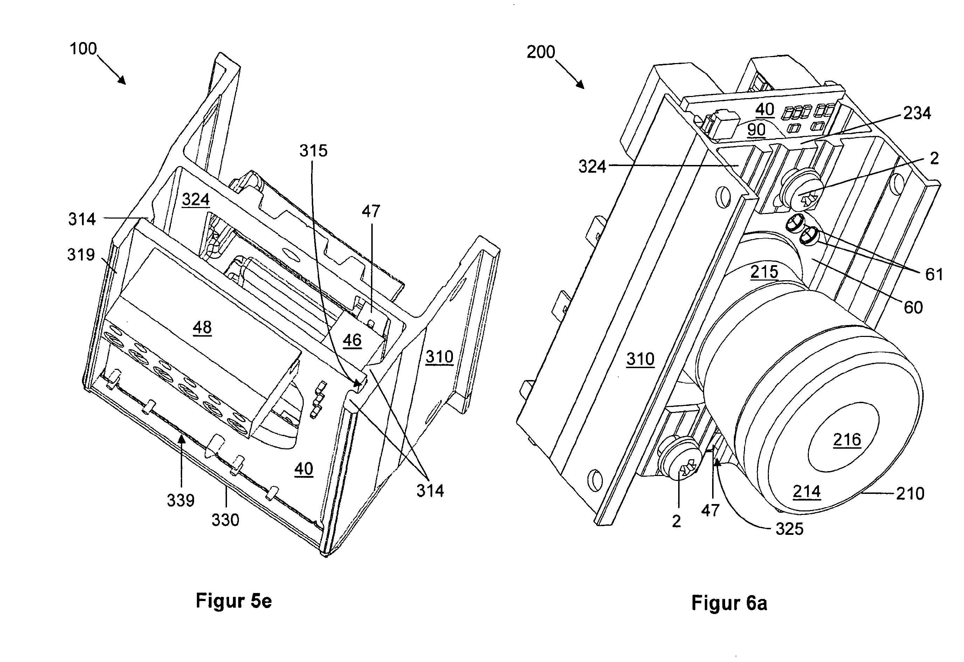

Figur 5e zeigt die Platine 40 von der zu Figur 5b entgegengesetzten Seite. Ferner sind ein Anschlussteil 48 und der Sabotageschalter 46 mit Schaltfahne 47 sichtbar. Wie zu erkennen, weist das Halteteil 310 drei zueinander parallel verlaufende Vorsprünge 314 auf. An der rechten unteren Innenseite des Halteteils 310 sind zwei dieser Vorsprünge 314 ausgebildet und schließen eine Nut 315 zur Aufnahme des zugewandten Seitenrands der Platine 40 auf. Auf der gegenüberliegenden Innenseite mit einer Seitenfläche 319 des Halteteils 310 ist beispielhaft nur ein Vorsprung 314 ausgebildet. Dieser weist zum Mittelsteg 324 des Halteteils 310 vorzugsweise den gleichen Abstand auf wie der oben rechts angeordnete Vorsprung 314. Das Einsetzen der Platine 40 erfolgt nun so, dass sie zunächst in die Nut 315 eingesetzt und dann in Richtung linken Vorsprung 314 geschwenkt wird. Dabei gelangt die Platine 40 mit der Seitenfläche 319 klemmend in Eingriff, sodass sie in der Montageposition festgehalten wird.

Vorzugsweise weist jedes Seitenteil 330 ferner eine schlitzartige Durchgangsöffnung 339 auf, die ausgebildet ist, die Platine 40 stirnseitig aufzunehmen. Dies hat den Vorteil, dass die Platine 40 vor dem Montieren der Seitenteile 330 allein am Halteteil 310 montiert werden kann, aber durch die Seitenteile 330 zusätzlich gesichert ist.

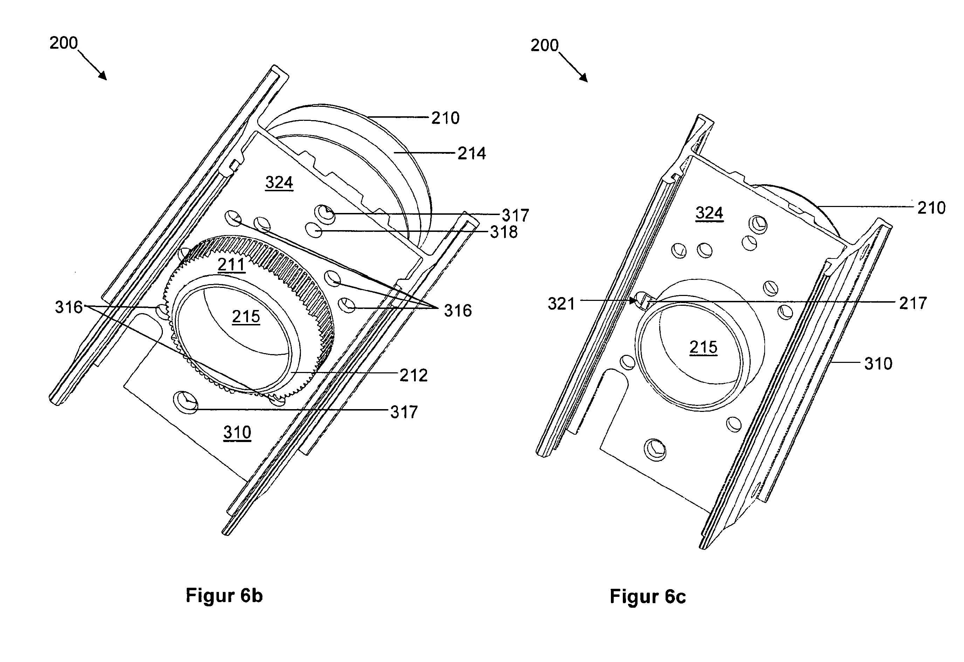

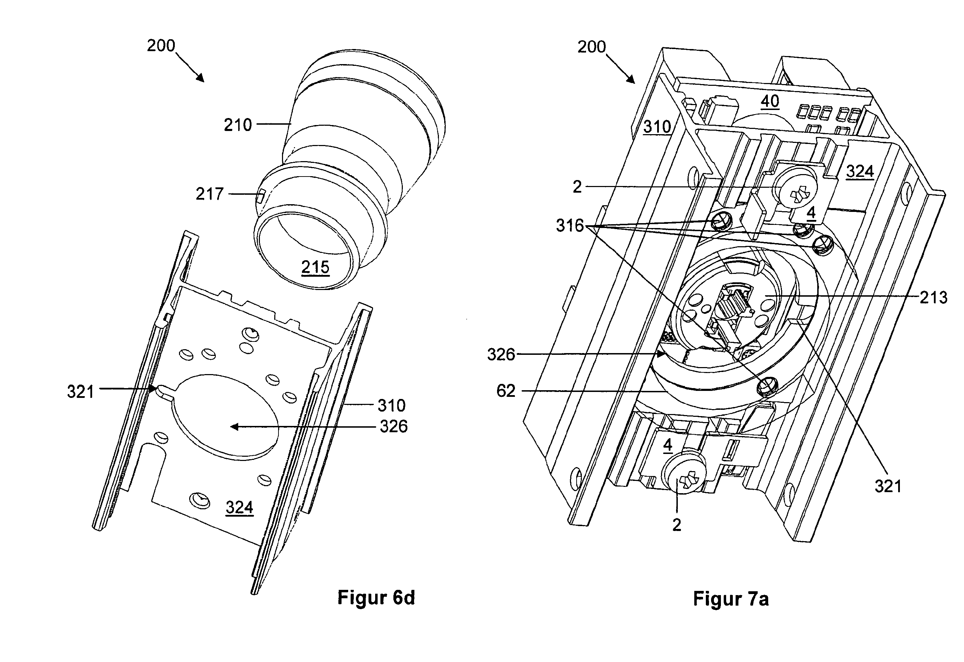

Figur 6 zeigt den Nottaster-Einsatz 200 hinsichtlich der Befestigung des Betätigungsknopfes 210. Wie in Figur 6a gezeigt, ist der Betätigungsknopf 210 im Wesentlichen zweigeteilt. Er umfasst einen Befestigungsabschnitt 215, der ortsfest hier am Halteteil 310 angebracht ist, und einen darin oder daran geführten Betätigungsabschnitt 214, der bei Betätigung eingedrückt wird. An der dem Benutzer zugewandten Seite weist der Betätigungsabschnitt 214 vorzugsweise einen lichtdurchlässigen Abschnitt 216 auf. In Betätigungsrichtung gesehen dahinter ist ein entsprechendes Leuchtelement beispielsweise in Form einer LED angeordnet.

Auf der dem Benutzer zugewandten Seite des Mittelstegs 324 ist hier eine Nachleuchtfolie 60 aufgebracht. Die Nachleuchtfolie 60 hat den Zweck, den Nottaster-Einsatz 200 auch dann noch eine Zeitlang be- bzw. hinterleuchten zu können, wenn mal der Strom ausgefallen sein sollte. Dadurch ist es Personen im (Halb-)Dunkeln weiterhin ermöglicht, den Nottaster bzw. beispielsweise die daneben angeordnete Tür zu finden. Die Nachleuchtfolie 60 erhöht somit die Sicherheit.

Die Nachleuchtfolie 60 weist an ausgewählten Stellen Durchgangsöffnungen 61 auf, die mit im Mittelsteg 324 ausgebildeten, hier nicht bezeichneten Durchgangsöffnungen 316 fluchten. Es entstehen somit komplette Durchgangsöffnungen. In diese sind Leuchtmittel oder Lichtleitteile eingesetzt, die dann von entsprechenden Leuchtmitteln so beleuchtet werden, dass deren emittiertes Licht in Richtung Betätigungsknopf 210 bzw. Benutzer geleitet wird. Die hier obere Schraube 2 ist von vorn durch das hier nicht dargestellte obere Seitenteil 330, den Mittelsteg 324 und eine Distanzhülse 90 geführt und mit der Platine 40 verschraubt oder durch sie ebenfalls hindurchgeführt und dahinter mit einer Mutter verschraubt. D. h. diese Schraube 2 fixiert die vier genannten Teile aneinander. Die untere Schraube 2 kann genauso verschraubt sein.

Alternativ fixiert sie lediglich das ebenfalls nicht dargestellte untere Seitenteil 330 und das Halteteil 310 über dessen Mittelsteg 324. Andeutungsweise ist noch die Schaltfahne 47 zu erkennen. Um die Schaltfahne 47 vom hier nicht dargestellten Schaltabschnitt 32 betätigbar zu gestalten, ist das Halteteil 310 in diesem Bereich ausgespart. D. h. der Mittelsteg 324 ist in diesem Bereich mit einer Durchtrittsöffnung 325 versehen, durch die hindurch der hier nicht dargestellte Schaltabschnitt 32 in Richtung Schaltfahne 47 frei bewegt werden kann.

Figur 6b zeigt den Einsatz 200 von der entgegengesetzten Seite, zusätzlich ohne Platine 40. Hier sind die Durchgangsöffnungen 316 deutlich zu erkennen. Der Befestigungsabschnitt 215 des Betätigungsknopfes 210 durchgreift den Mittelsteg 324 und weist an seinem dem Betätigungsabschnitt 214 abgewandten Ende einen Außengewindeabschnitt 212 auf, auf den hier eine Rändelmutter 211 aufgeschraubt ist und so den Befestigungsabschnitt 215 am Mittelsteg 324 fixiert. Ferner sind Durchgangsöffnungen erkennbar, die dem Durchführen der jeweiligen Schraube 2 dienen und somit Befestigungsöffnungen 317 bilden. Schließlich gibt es noch hier eine Durchgangsöffnung 318, die dem Leiten von Schall einer vorzugsweise auf der nicht abgebildeten Platine 40 angeordneten Schallquelle in Richtung Benutzer dient.

Figur 6c und Figur 6d zeigen die verdrehsichere Anbringung des Befestigungsabschnitts 215 des Betätigungsknopfes 210. Dazu weist das Halteteil 310 im Bereich seiner Durchgangsöffnung 326 zum Durchführen des Befestigungsabschnitts 215 durch den Mittelsteg 324 seitlich eine Ausnehmung 321 auf, in die ein korrespondierender Vorsprung 217 des Befestigungsabschnitts 215 eingreift und damit der Befestigungsabschnitt 215 im Halteteil 310 gegen ein Verdrehen gesichert ist. Damit sind auf einfache Weise zum Einen die Montageposition des Befestigungsabschnitts 215 in Bezug auf das Halteteil 310 definiert und zum Anderen eine Verdrehsicherung des Befestigungsabschnitts 215 in Bezug auf das Halteteil 310 bereitgestellt.

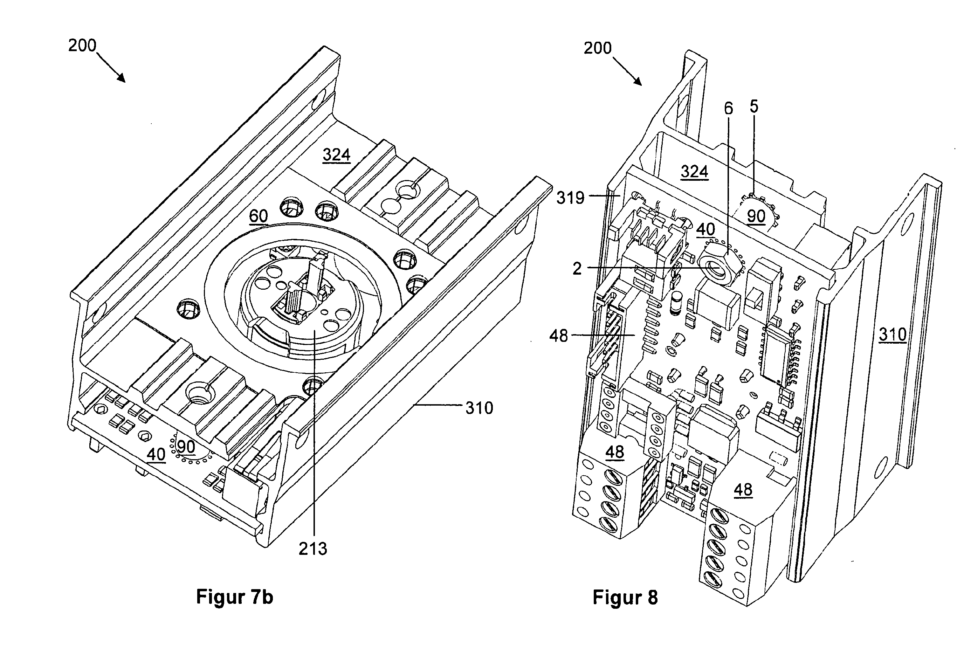

Figur 7 zeigt den Einsatz 200 in zwei Varianten und in zu Figur 6a ähnlichen Perspektiven, nur ohne Betätigungsabschnitt 214 und Befestigungsabschnitt 215. Dadurch ist das aus Benutzersicht dahinterliegende, eigentliche, also elektromechanische Schalt(er)teil 213 des Betätigungsknopfes 210 deutlich erkennbar, das vorteilhafterweise auf der Platine 40 angebracht ist.

Gemäß Figur 7a ist anstelle oder zusätzlich zur Nachleuchtfolie 60 auf der dem Benutzer zugewandten Seite des Mittelstegs 324 des Halteteils 310 ein Lichtleitteil 62 angeordnet. Es ist hier zylinderartig gestaltet, um insbesondere den Durchgriff des nicht abgebildeten Betätigungsknopfes 210 zu gewährleisten. Aufgrund des Lichtleitteils 62 kann das durch die Durchgangsöffnungen 316 im Mittelsteg 324 hindurch geführte Licht der Leuchtelemente verteilt werden, sodass sich optisch der Eindruck eines den Betätigungsknopf 210 umgebenden Leuchtrings ergibt.

Die Schrauben 2 sind vor dem Durchführen durch die nicht dargestellten Seitenteile 330 noch zusätzlich durch Sicherungsteile 4 hindurchgeführt, die das Lichtleitteil 62 beispielsweise mittels Verklemmens sicher in Position halten.

Eine in Figur 7b gezeigte Abwandlung des Einsatzes 200 ist dadurch gekennzeichnet, dass anstelle einer Nachleuchtschicht auf den Mittelsteg 324 des Halteteils 310 eine Reflexionsschicht 60 aufgebracht ist. Diese kann beispielsweise eine Oberfläche mit vielen kleinen Prismenformen aufweisen, um das Licht verteilen zu können.

Auf der Platine 40 ist ein Distanzstück 90 befestigt, das exemplarisch ein Innengewinde aufweist, in die die zugehörige, hier nicht dargestellte Schraube 2 eingeschraubt ist.

Figur 8 zeigt eine andere Anbringung der Platine 40. Auch hier gibt es ein Distanzstück 90. Allerdings ist die Schraube 2 mit einer Mutter 6 verschraubt.

Das Halteteil 310 ist exemplarisch aus elektrisch leitendem Material, also vorteilhafterweise Metall wie Aluminium, gefertigt. Auch die somit Distanzhülse 90 ist elektrisch leitfähig und zudem mit der Platine 40 elektrisch gekoppelt. Zwischen Mittelsteg 324 und Distanzhülse 90 ist eine Zahn-oder Fächerscheibe 5 angeordnet. Diese hat die Funktion, sich eine auf der der Distanzhülse 90 zugewandten Seite des Mittelstegs 324 etwaig befindliche, elektrisch nicht oder nur schwer leitende Schicht beim Festziehen der Schraube 2 zu durchbrechen und damit einen elektrischen Kontakt zwischen Platine 40 und Halteteil 310 herzustellen. Eine solche Schicht kann beispielsweise durch Lackieren oder Oberflächenkorrosion entstehen. Der elektrische Kontakt kann einerseits notwendig sein, um alle metallischen Teile zu erden. Andererseits ist mit der speziellen Form des Halteteils 310 eine elektromagnetische Abschirmung möglich. Insbesondere der H-förmige Querschnitt umgibt die Platine 40 an drei Seiten und insbesondere in Richtung Benutzer.

Ein wesentlicher Vorteil dieser Ausgestaltung ist, dass allein das Halteteil 310 die Betätigungskräfte aufnehmen muss. Daher müssen die Seitenteile 330 nicht genauso stabil ausgebildet werden und können aus einem weniger stabilen Material hergestellt sein.

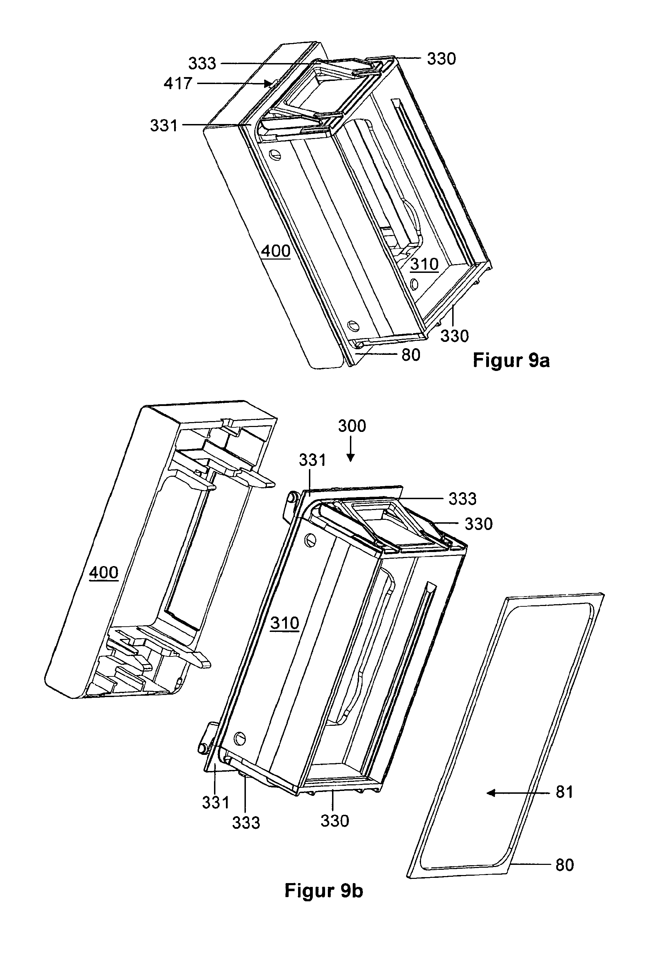

Figur 9 zeigt eine Erweiterung für die Einsätze 100, 200. Aus Sicht des Benutzers hinter dem Rahmen 400 ist ein scheiben- oder plattenartiges Distanzstück 80 angeordnet. In Betätigungsrichtung gesehen, sind seine Außenkontur an die Außenkontur des Rahmens 400 und seine Innenkontur bzw. Öffnung 81 an die Außenkontur der Anordnung der Seitenteile 330 und des Halteteils 310 im Bereich zwischen Auflageabschnitt 331 und Rast-/Klemmabschnitt 333 des jeweiligen Seitenteils 330 angepasst. Das Distanzstück 80 ermöglicht das Montieren des Einsatzes 100, 200 bzw. dessen Anbringabschnitts 300 auch in Öffnungen 12, deren in Richtung Einsatz 100, 200 weisende Ränder schmaler sind als der vorbeschriebene Abstand a zwischen Auflageabschnitt 331 und Rast-/Klemmabschnitt 333 des jeweiligen Seitenteils 330.

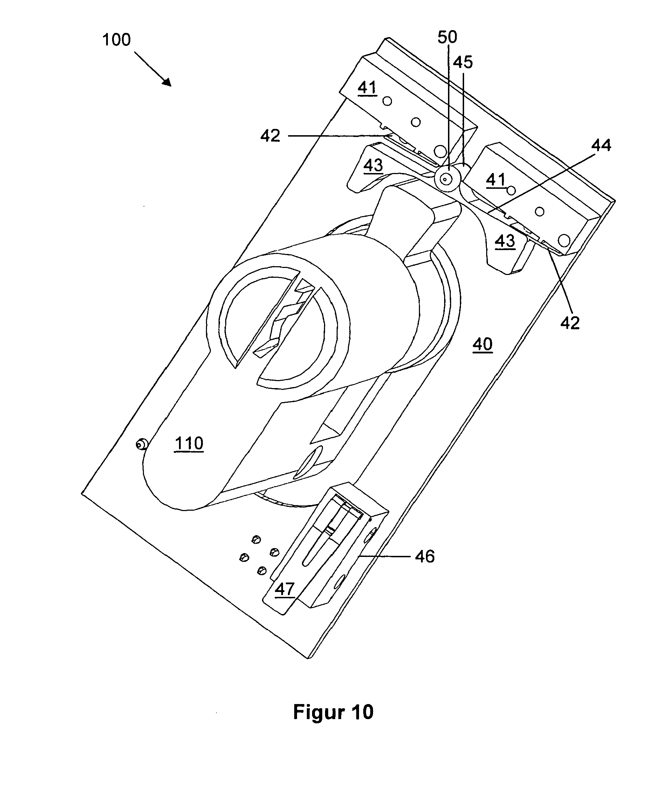

Figur 10 zeigt eine Abwandlung des Schlüsselschalter-Einsatzes 100. Es gibt wieder zwei Schalter 41 mit Schaltfahnen 42. Die Schaltwippe 44 weist hier blockartige Betätigungsvorsprünge 43 auf.

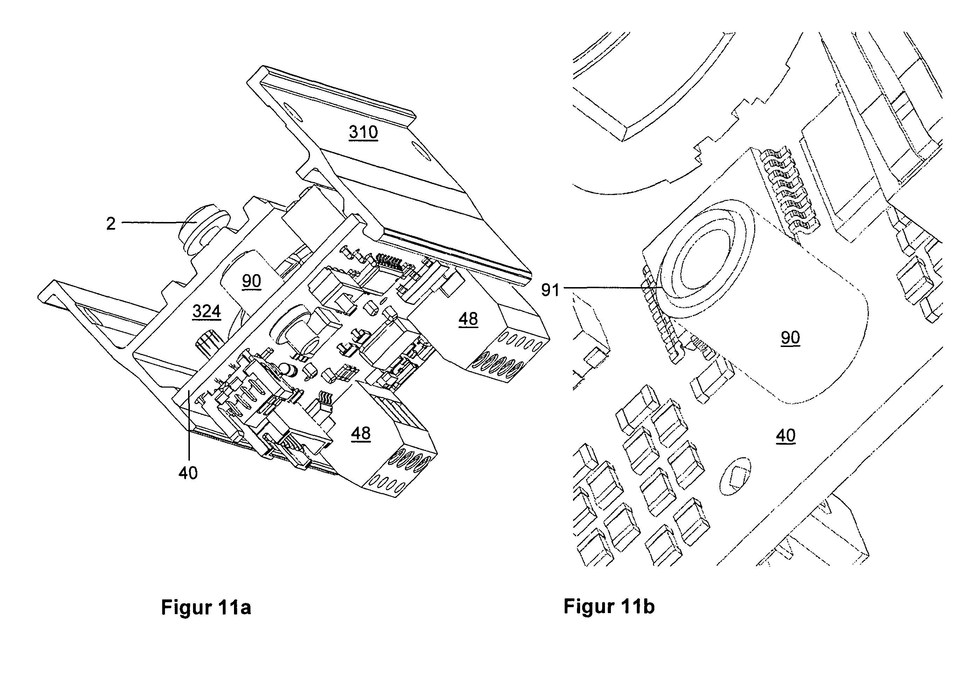

Figur 11 zeigt eine Abwandlung der Befestigung der Platine 40. Hier fehlt eine Zahn-/Fächerscheibe 5. Um die Distanzhülse 90 dennoch sicher mit dem Halteteil 310 bzw. dessen Mittelsteg 324 elektrisch in Kontakt zu bringen, weist diese einen Schneidabschnitt 91 auf. Dieser ist hier ringförmig mit einer in Richtung Halteteil 310 weisenden Schneidkante ausgebildet.

Alternativ verläuft die Schneidkante diskontinuierlich und kann im Extremfall aus mehreren, ringförmig verteilten Spitzen bestehen.

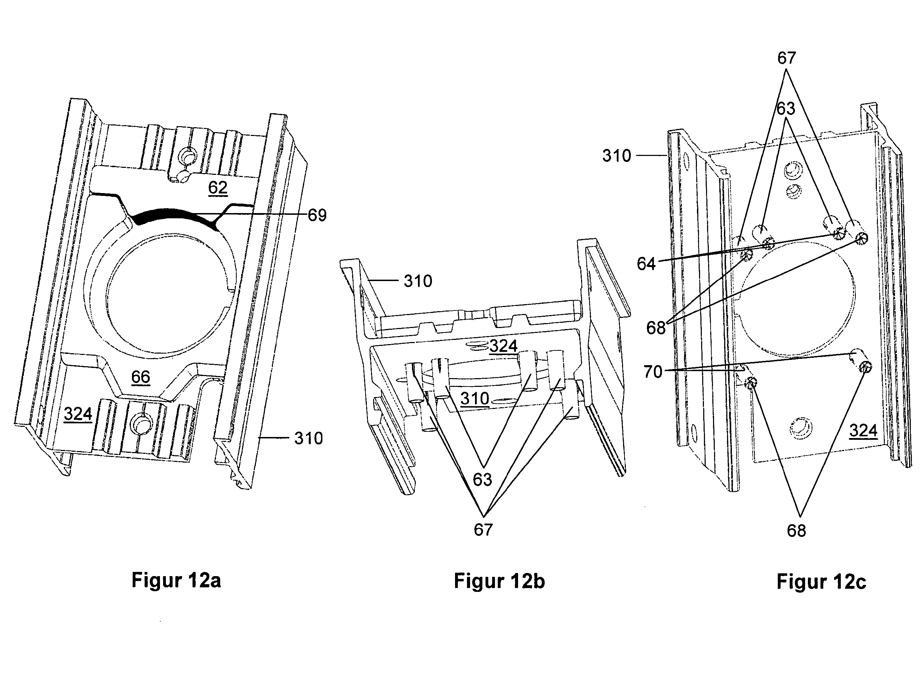

Figur 12 zeigt eine Abwandlung der vorbeschriebenen Lichtführung. Hier gibt es zwei Lichtteile 62, 66. An der dem Mittelsteg 324 des Halteteils 310 zugewandten Seite sind an den Lichtteilen 62, 66 pfostenartige Vorsprünge 63 bzw. 67 angeformt, die vorzugsweise durch den Mittelsteg 324 im Bereich der hier nicht bezeichneten Durchtrittsöffnungen 316 hindurchtreten. An ihrem der nicht dargestellten Platine 40 zugewandten Ende weisen die Pfosten 63, 67 vorzugsweise kegel(stumpf)förmige Ausnehmungen 64, 68 auf, in die zugehörige, auf der Platine 40 angeordnete Leuchtmittel teilweise eintauchen. Die Ausnehmungen 64, 68 dienen der Verteilung des von dem jeweiligen Leuchtmittel emittierten Lichts im jeweiligen Pfosten 63, 67 und der Weiterleitung an das jeweilige Lichtteil 62, 66. Hinter den Pfosten 63 befinden sich beispielhaft gelbe LEDs, wohingegen hinter den Pfosten 67 Rot/Grün-LEDs angeordnet sind. D. h. jedem Lichtteil 62, 66 ist eine Leuchtfarbe bzw. -kombination zugeordnet. Damit nun nicht Licht von einem Lichtteil 62, 66 auf das andere Lichtteil 62, 66 übertragen wird und damit unerwünschte Beleuchtungszustände aufgrund von Farbmischungen entstehen, ist beispielhaft das Lichtteil 62 an Rändern, die dem Lichtteil 66 zugewandt sind, mit einer lichtundurchlässigen Beschichtung 69 beispielsweise in Form einer Folie versehen.

Vorzugsweise ist jeder Pfosten 63, 67 mit seitlichen, sich in Richtung Platine 40 verjüngenden Längsrippen 65, 70 versehen. Die Rippen 65, 70 dienen zum Einen dem vereinfachten Einsetzen der Pfosten 63, 67 in die Durchgangsöffnungen 316. Zum anderen dienen sie der Positionierung des jeweiligen Lichtteils 62, 66 in Bezug auf das Halteteil 310.

Die sich verjüngenden Rippen 65, 70 bieten die Möglichkeit, den jeweiligen Pfosten 63, 67 in der zugehörigen Durchgangsöffnung 316 zu zentrieren. Sie können zudem verformbar ausgebildet sein, sodass ein besserer Sitz im Mittelsteg 324 erreicht werden kann.

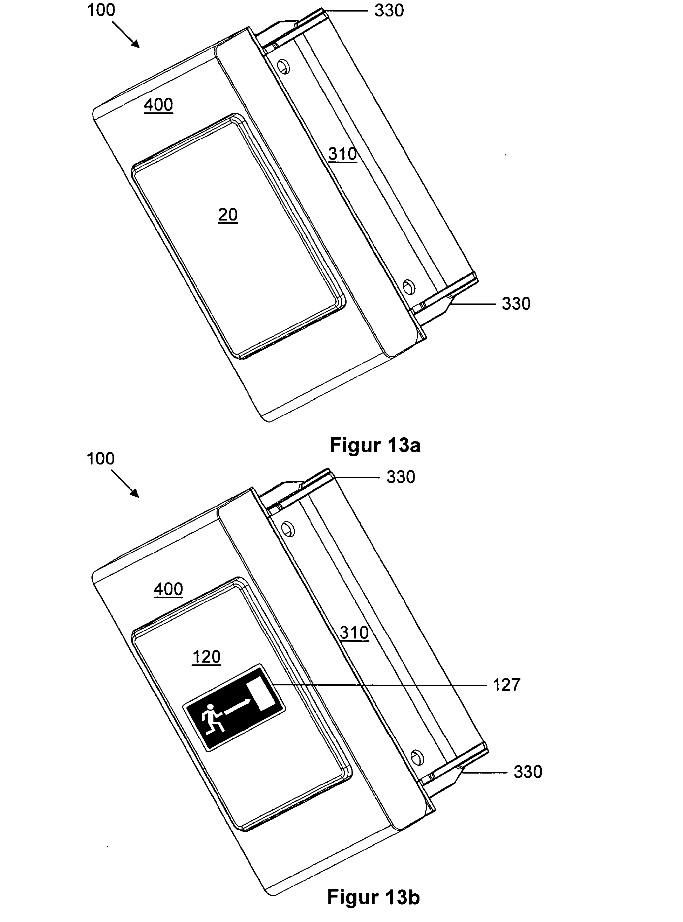

Figur 13a zeigt Abwandlungen des Schlüsselschalter-Einsatzes 100. Wie zu erkennen, ist der Profilzylinder 110 von einer Abdeckung 20 verdeckt. D. h. er steht gegenüber der vorigen Ausführungsform nicht so weit aus dem Rahmen 400 hervor. Die Abdeckung 20 ist beispielsweise im Rahmen 400 verrastet und kann, wenn gewünscht, gelöst werden. Dazu kann seitlich ein hier nicht dargestellter Schlitz vorgesehen sein, über den eine Rastnase der Abdeckung 20 außer Eingriff mit dem Rahmen 400 gebracht werden kann. Diese Ausführung hat den Vorteil, dass ein etwaiger Einbrecher nicht weiß, dass sich hinter der Abdeckung 20 ein Schlüsselschalter befindet. Damit erhöht sich die Sicherheit.

Die in Figur 13b gezeigte Variante verstärkt diese Wirkung. Hier gibt es einen Rahmen 120, der ein Schild 127 umgibt. Das Schild 127 kennzeichnet hier einen Fluchtweg und ist vorzugsweise beleuchtet. Hinter dem Schild 127 ist wieder der Profilzylinder 110 anordbar.

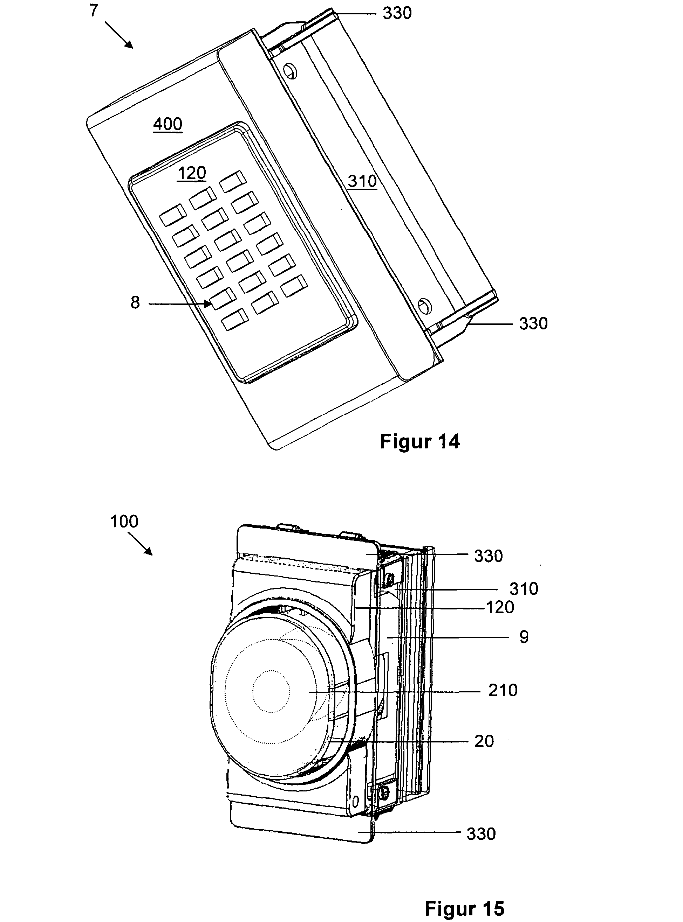

Figur 14 zeigt einen Einsatz 7 gemäß einer dritten Ausführungsform der Erfindung. Der Rahmen 120 umgibt beispielhaft Tasten einer Tastatur 8. Der Einsatz 7 beinhaltet also eine Codetastatur.

Figur 15 zeigt einen Nottaster-Einsatz 100 gemäß einer anderen Ausführungsform der Erfindung. Hier ist der Rahmen 120 zweigeteilt. D. h. die Abdeckung 20 ist zwischen zwei Hälften des Rahmens 120 eingesetzt. Unterhalb der Abdeckung 20 befindet sich wie gehabt der Betätigungsknopf 210. Die Seitenteile 330 sind an einem Halteteil 310 angebracht und über einen Verbindungsabschnitt 9 zu einem einstückigen Teil zusammengefasst. Die Abdeckung 20 ist am Halteteil 310 oder am Verbindungsabschnitt 9 befestigt.

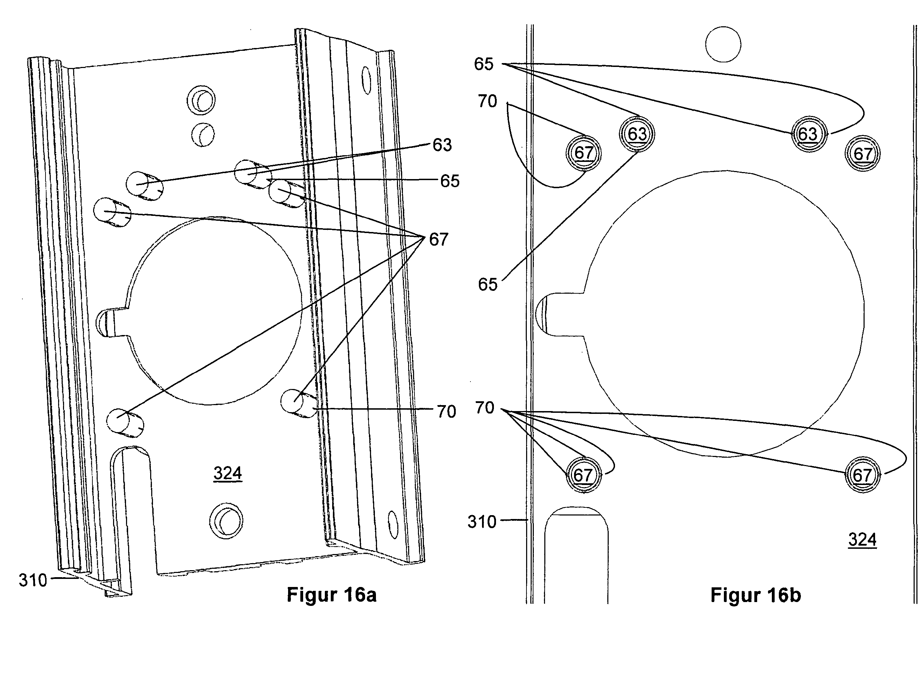

Figur 16 wiederum zeigt zwei Varianten der Pfosten 63, 67.

Gemäß Figur 16a weisen die Pfosten 63, 67 jeweils sechs, umfangsseitig vorzugsweise gleichmäßig verteilt angeordnete Rippen 65, 70 auf, von denen der Übersichtlichkeit halber nur jeweils eine bezeichnet ist. Dies hat den Vorteil einheitlich geformter Pfosten 63, 67.

Gemäß Figur 16b wiederum weisen die Pfosten 63, 67 unterschiedlich Längsrippen 65, 70 auf. Die Pfosten 63 des Lichtleitteils 62 weisen an gegenüberliegenden Seiten jeweils nur zwei Rippen 65 auf, die paarweise zueinander um exemplarisch 90° versetzt sind. Aufgrund der die Pfosten 63 aufnehmenden, hier nicht bezeichneten, vorzugsweise im Querschnitt kreisrunden Durchgangsöffnungen 316 des Halteteils 310 wird das Lichtleifteil 62 trotzdem positionsgenau fixiert; eine Verdrehung in den Durchgangsöffnungen 316 ist ausgeschlossen. Die Pfosten 67 des Lichtleitteils 66 wiederum weisen zueinander komplett unterschiedliche Rippenkonstruktionen auf. Die Pfosten 67 links oben und rechts unten sind analog den Pfosten 63 ausgebildet. Aufgrund der Größe des Lichtleitteils 66 weist der Pfosten 67 links unten vier vorzugsweise außenumfänglich gleichmäßig verteilt angeordnete Rippen 70 auf.

D. h. allein die Rippenanordnung ist in der Lage, das jeweilige Lichtleitteil 62, 66 sicher zu positionieren; zusätzliche Hilfsmittel sind nicht erforderlich.

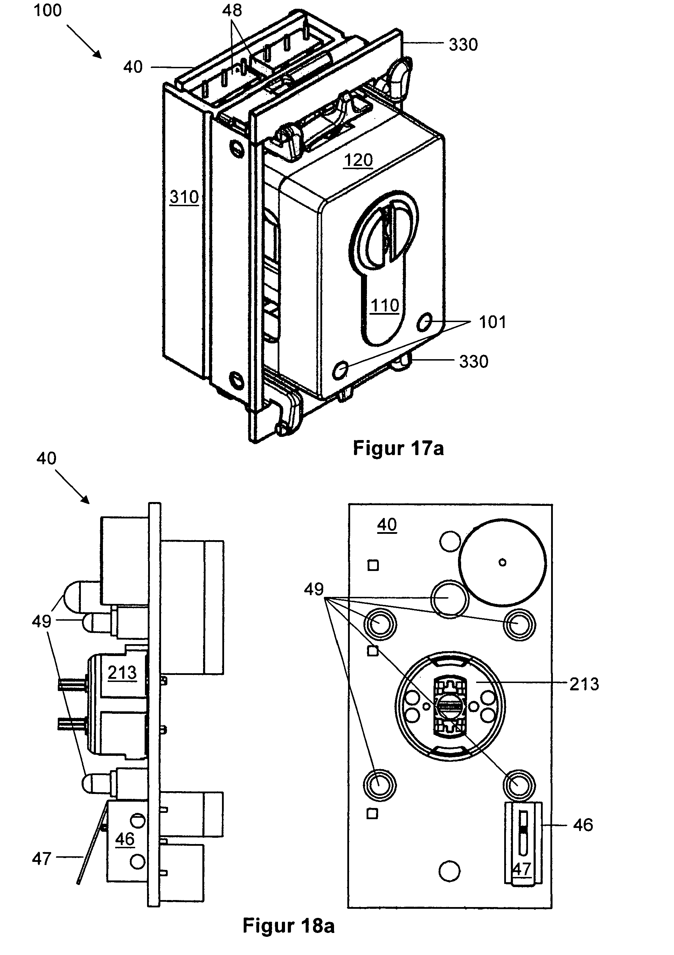

Figur 17 zeigt einen Schlüsselschalter-Einsatz 100 in einer Abwandlung. Unterhalb des Profilzylinders 110 sind seitlich zwei Leuchtabschnitte 101 in Form von Lichtleitteilen oder Leuchtelementen wie LEDs angeordnet. Auf der Platine 40 sind zwei Anschlussteile 48 zu erkennen, die nicht bezeichnete Anschlüsse beispielhaft für eine Buskopplung aufweisen.

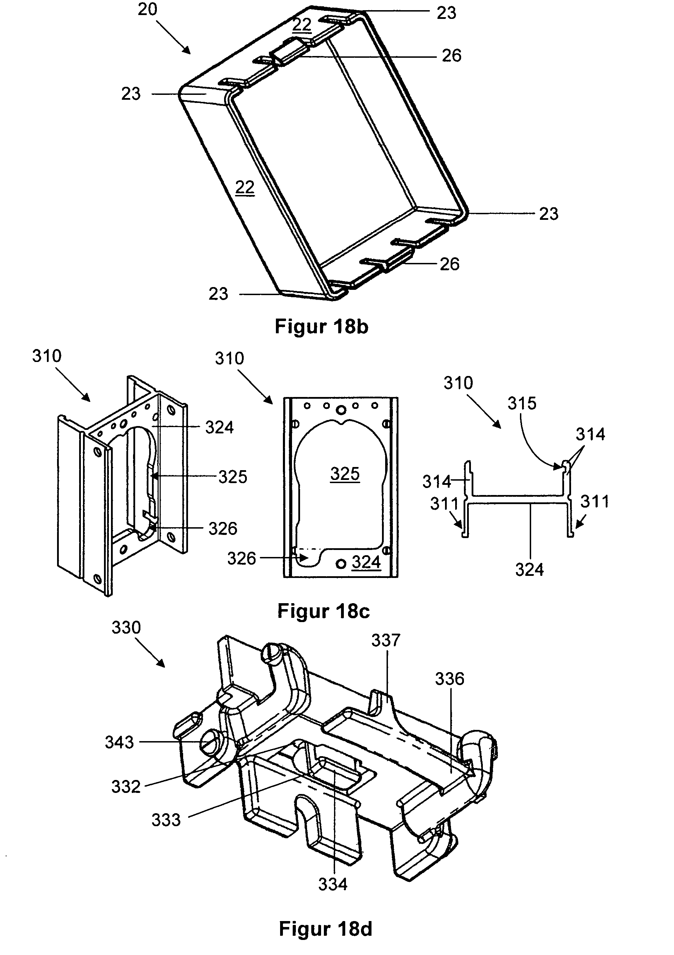

Figur 18 zeigt einen abgewandelten Nottaster-Einsatz 200 in verschiedenen Ansichten.

Figur 18a zeigt dessen Platine 40 einmal von der Seite und einmal von vorn. Neben dem Schalterteil 213 und dem Sabotageschalter 46 sind hier fünf Leuchtelemente 49 exemplarisch in Form von LEDs angeordnet. Sie fluchten vorzugsweise mit den Durchgangsöffnungen 316 des nicht dargestellten Halteteils 310. Die runde Kopfform begünstigt die Nutzung der mit Ausnehmungen 64, 68 versehenen Pfosten 63, 67.

Figur 18b zeigt die Abdeckung 20. Wie zu erkennen, ist sie wieder mit Führungsflächen 22 und -ecken 23 versehen. Hier fehlt der Auflageabschnitt 25. Stattdessen verfügt die Abdeckung 20 über hier federnd gelagerte Rastköpfe 26, die eine korrespondierende Fläche des nicht dargestellten Rahmens 400 hintergreifen. Die Federung erlaubt das Einsetzen bzw. Einschieben der Abdeckung 20 in Betätigungsrichtung des nicht dargestellten Betätigungsknopfes 210.

Figur 18c zeigt das zugehörige Halteteil 310 in verschiedenen Ansichten. Der Hauptunterschied zu den vorigen Ausführungsformen besteht darin, dass Durchtrittsöffnung 325 und Durchgangsöffnung 326 einteilig sind (separiert durch eine Strichpunktlinie), es also nur noch eine einzige durchgehende Öffnung im Mittelsteg 324 gibt. Ferner sind die Vorsprünge 314 nicht hervorstehend ausgebildet. Stattdessen ist rechtsseitig nur eine Nut 315 ausgebildet, wohingegen der linke Vorsprung 314 als Absatz ausgebildet ist, auf dem die nicht dargestellte Platine 40 zu liegen kommt.

Figur 18d zeigt eines der Seitenteile 330 in größerem Detail. Gegenüber den vorigen Ausführungsformen ist der Rasthaken 332 schmaler ausgebildet.

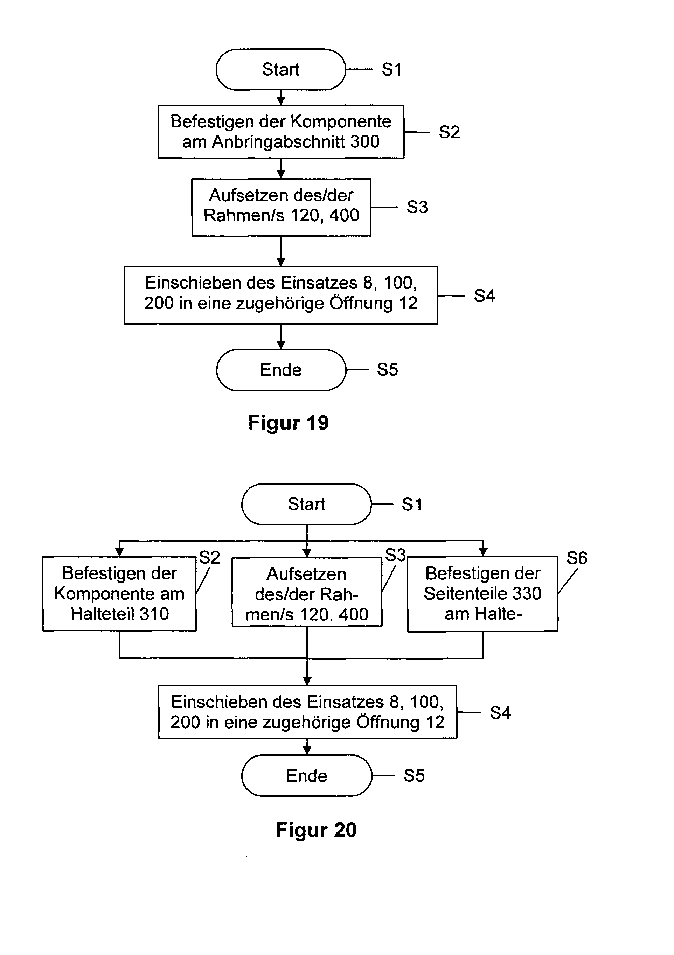

Mit den vorgestellten Einsätzen 100, 200 ist eine sehr einfache, in Figur 19 dargestellte Montage möglich. Nach dem Beginn in Schritt S1 wird die jeweilige Komponente, also exemplarisch die Platine 40 mit Profilzylinder 110 bzw. Betätigungsknopf 210, in einem nachfolgenden Schritt S2 am Anbringabschnitt 300 bzw. dessen Halteteil 310 befestigt. Vorzugsweise danach wird der bzw. werden die Rahmen 120, 400 in einem Schritt S3 aufgesetzt. Der Rahmen 120 wird dabei ebenfalls am Halteteil 310, Rahmen 400 und/oder an einem oder beiden Seitenteilen 330 angebracht. Schritt S4 kann auch parallel zu Schritt S2 erfolgen. Daraufhin wird das so gebildete Einsatzmodul in einem Schritt S4 in eine zugehörige Öffnung 12 des korrespondierenden Wandabschnitts 10 eingeschoben und dabei automatisch arretiert. Damit ist die Montage in einem Schritt S5 abgeschlossen.

Kann der Rahmen 120 bzw. die Abdeckung 20 in Einschubrichtung in den Rahmen 400 eingeschoben werden, kann dessen bzw. deren Montage auch nach Einschieben des Einsatzes 100, 200 erfolgen.

Besteht der Anbringabschnitt 300 aus Halteteil 310 und Seitenteilen 330, ist die Montage gemäß Figur 20 abgewandelt. Es gibt einen einzigen zusätzlichen Montageschritt S6, nämlich das Befestigen der Seitenteile 330 am Halteteil 310, um den Anbringabschnitt 300 fertigzustellen. Ansonsten bleibt die Montage gleich.

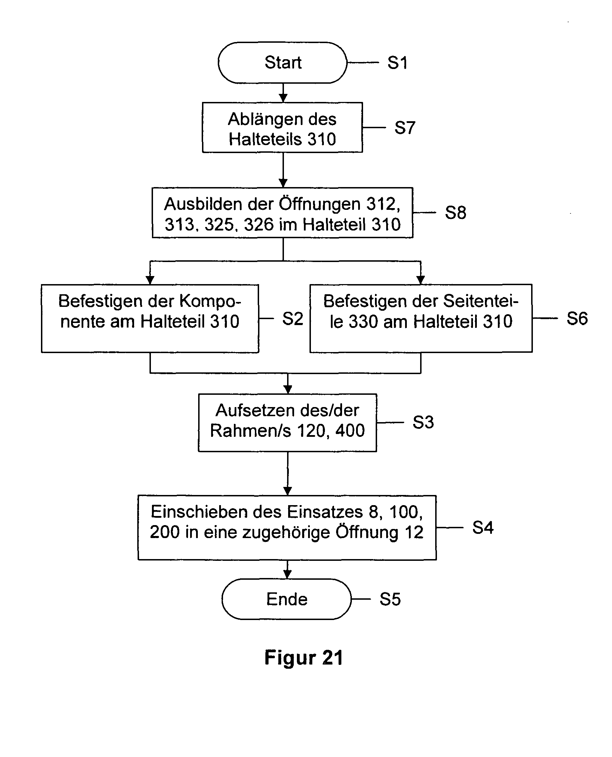

Um das Halteteil 310 aus einem Strangprofil herzustellen, ist das Verfahren gemäß Figur 21 abgewandelt. Vor den Schritten S2 - S4 und S6 wird das Halteteil 310 in einem Schritt S7 zunächst abgelängt. Daraufhin werden die Durchgangsöffnungen 325, 326 für beispielsweise den Betätigungsknopf 210 und hier für die Schaltwippe des Sabotageschalters 47 bzw. den Schaltabschnitt 32 beispielsweise mittels Fräsens herausgebildet. Zudem werden die Befestigungsöffnungen 312, 313 und ggf. Durchgangsöffnungen 316 für Leuchtelemente 49 bzw. Pfosten 63, 67 beispielsweise mittels Bohrens ausgebildet.

Die Erfindung ist nicht auf die vorbeschriebenen Ausführungsformen beschränkt.

Die Einsätze 100, 200 sind nicht nur für Hohlprofile 10 verwendbar. Sie können in jeder Wand mit einer ausreichend großen Ausnehmung eingesetzt werden, die eine vom Einsatz 100, 200 einklemmbare Wandung aufweist, die somit einen Seitenrand der Öffnung 12 darstellt.

Um den Einsatz 100, 200 auch klassisch in für 55 mm-Einsätze konzipierte Wandausnehmungen, also Unterputz, einsetzen zu können, ist eine Adapterplatte vorsehbar, die die Öffnung 12 aufweist und so bemessen ist, dass sie auf den Wandabschnitt aufgeschraubt oder in einer entsprechenden Einsatzdose oder dergleichen verklemmt wird. Sie bildet die Befestigungsbasis für den sonstigen Einsatz 100, 200 bzw. dessen Anbringabschnitt 300.

Demzufolge ist auch eine Aufputzmontage möglich; es ist lediglich eine Aufputzdose erforderlich, um die Adapterplatte in bekannter Weise aufzunehmen.

Der Anbringabschnitt 300 ist nicht auf die in Einschubrichtung gesehen rechteckige Außenform beschränkt. Insbesondere die Seitenteile 330 bzw. deren Rasthaken 332 können beispielsweise so geformt sein, dass sie im Montagezustand Teil einer kreisförmigen Außenkontur sind. Somit ist es möglich, den Einsatz 100, 200 in beispielsweise kreisförmige, hinterschnittene Öffnungen 12 einer Wand bzw. eines Wandabschnitts einzusetzen, ohne dass sich etwas an der montierten Komponente ändern würde.

Das gleiche gilt für den bzw. die Rahmen 120, 400 oder auch für die Abdeckung 20. Rückseitig ist das jeweilige Teil 20, 120, 400 gestaltet, am Rahmen 120, 400, Rahmen 400 bzw. Anbringabschnitt 300 angebracht zu werden. In Einschubrichtung gesehen, kann das Teil 20, 120, 400 jede andere Außenform aufweisen, die gerade gewünscht ist.

Mit der Erfindung sind Einsätze mit, in Einschubrichtung gesehen, Außenabmessungen von beispielsweise 75 x 40 mm möglich. Damit sind Abmessungen für die Öffnung 12 von beispielsweise 81 x 37 mm möglich. Die Einsetztiefe, also die Tiefe der Ausnehmung inkl. Öffnung 12, kann 32 mm betragen. Es ergeben sich also enorm kleine Einbaumaße für den Einsatz 100, 200 in einem Wandabschnitt.

Die Lichtleitteile 62, 66 können einstückig ausgebildet sein.

Die Anzahl an Leuchtelementen 49 bzw. Pfosten 63, 67 sowie deren Anordnung kann gemäß den gewünschten Beleuchtungsanforderungen variieren.

Der erfindungsgemäße Einsatz 100, 200 kann alternativ oder zusätzlich als Komponente einen Schalter, Sensor, Bedienpaneel, Anzeigeelement oder dergleichen bzw. eine Kombination davon aufweisen.

Das Halteteil 310 kann länger ausgebildet und mit mehreren Durchtrittsöffnungen 325, 326 versehen werden. Es entsteht somit ein für mehrere Komponenten geeigneter, einzelner Einsatz. Auch hier sind im Extremfall nur die zwei Seitenteile 330 erforderlich, um den ganzen Einsatz im jeweiligen Wandabschnitt beim Einschieben zu arretieren. Die Komponenten sind dann einfach vorzugsweise in einer Reihe hintereinander anordbar.

Im Falle des Schlüsselschalters 100 mit Profilzylinder 110 kann der Betätigungsvorsprung 112 auch innerhalb der Durchtrittsöffnung 325 im Mittelsteg 324 des Halteteils 310 angeordnet sein. In dem Fall kann die Durchtrittsöffnung 325 so ausgebildet sein, dass sie die Drehung des Betätigungsvorsprungs 112 nur innerhalb eines vorbestimmten Bereichs erlaubt. An den Grenzen dieses Bereichs stößt der Betätigungsvorsprung 112 gegen die Umrandung der Durchtrittsöffnung 325 und kann nicht weiter gedreht werden.

Die Seitenteile 330 und das Halteteil 310 können einstückig ausgebildet sein. Das gleiche gilt für die Paarung der Rahmen 120, 400.

Das Halteteil 310 muss keinen H-förmigen Querschnitt aufweisen. Es kann beispielsweise U-förmig ausgebildet sein, wobei das Halteteil 310 mit dem Boden des U voran in die Öffnung 12 eingeschoben wird. Es ist jede Form geeignet, die eine Anbringung der Komponente und ein Arretieren des Einsatzes in der Öffnung 12 ermöglicht.

Der Profilzylinder 110 ist in den vorbeschriebenen Ausführungsformen als Halbprofilzylinder ausgebildet, also nur von einer Seite her zugänglich. Er kann selbstverständlich auch als klassischer, beidseitig betätigbarer Profilzylinder ausgebildet sein. In dem Fall wird das andere Ende in der Ausnehmung des Wandabschnitts aufgenommen oder tritt durch sie hindurch, sofern sie durchgehend ausgebildet ist. In dem Fall kann an der gegenüberliegenden Seite des Wandabschnitts am Anbringabschnitt 300 eine zusätzliche Abdeckung 20 vorgesehen sein, die den Profilzylinder 110 auf dieser Seite vollständig abdeckt oder nur umgibt.

Die Beschichtung 60 kann auch in Einschubrichtung gesehen hinter einem Lichtleitteil 62, 66 angeordnet sein.

Zusammenfassend ist durch die Erfindung ein universell einsetzbarer Einsatz für in Wände zu montierende Einsätze gebildet, der mit einer Vielzahl an Komponenten versehen werden kann und in eine Vielzahl von mittels Wandausnehmungen vorzugsweise hinterschnittenen Öffnungen einsetzbar ist.

Zudem erlaubt die Erfindung ein enorm einfaches und wenig fehleranfälliges Montageverfahren.

### Bezugszeichenliste

- 1: Flügelanlage
- 2: Schraube
- 3: Schraube
- 4: Sicherungsteil
- 5: Zahn-/Fächerscheibe
- 6: Mutter
- 7: Einsatz
- 8: Tastatur
- 9: Verbindungsabschnitt

- 10: Rahmenprofil
- 11: Ausnehmung/Hohlraum
- 12: Öffnung
- 13: Falz
- 14: Falz
- 15: Außenwand

- 20: Abdeckung
- 21: Führungsvorsprung
- 22: Führungsfläche
- 23: Führungsecke
- 24: Anschlagfläche
- 25: Auflageabschnitt
- 26: Rastkopf

- 30: Lagerteil
- 31: Einschubabschnitt
- 32: Schaltabschnitt
- 33: Drehlager
- 34: Verzahnung
- 35: Vorsprung
- 36: Rastfläche

- 40: Platine
- 41: Wippschalter
- 42: Schaltfahne
- 43: Betätigungsvorsprung
- 44: Schaltwippe
- 45: Lagerachse
- 46: Sabotageschalter
- 47: Schaltfahne
- 48: Anschlussteil
- 49: Leuchtelement
- 50: Sicherung

- 60: Nachleucht- bzw. Reflexionsschicht oder -folie
- 61: Durchgangsöffnung
- 62: Lichtleitteil
- 63: Pfosten
- 64: Ausnehmung
- 65: Rippe
- 66: Lichtleitteil
- 67: Pfosten
- 68: Ausnehmung
- 69: Beschichtung
- 70: Rippe
- 80: Distanzstück
- 81: Durchgangsöffnung

- 90: Distanzhülse
- 91: Schneidabschnitt

- 100: Schlüsselschalter-Einsatz
- 101: Leuchtabschnitt
- 110: Profilzylinder
- 111: Betätigungsteil
- 112: Betätigungsvorsprung
- 113: Befestigungsöffnung
- 114: Anschlagfläche
- 120: Rahmen
- 121: Befestigungsabschnitt
- 122: Aufnahmeabschnitt
- 123: Befestigungsöffnung
- 124: Führungsfläche
- 125: Führungsecke
- 126: Anschlagfläche
- 127: Schild
- 128: Aufnahmeabschnitt

- 200: Nottaster-Einsatz
- 210: Betätigungsknopf
- 211: Rändelmutter
- 212: Außengewindeabschnitt
- 213: Schalterteil
- 214: Betätigungsabschnitt
- 215: Befestigungsabschnitt
- 216: Lichtdurchlass
- 217: Vorsprung

- 300: Anbringabschnitt
- 310: Halteteil
- 311: Auflageabschnitt
- 312: Befestigungsöffnung
- 313: Befestigungsöffnung
- 314: Führungsvorsprung
- 315: Führungsnut
- 316: Durchgangsöffnung
- 317: Befestigungsöffnung
- 318: Durchgangsöffnung
- 319: Seitenfläche
- 320: Zapfen
- 321: Ausnehmung
- 322: Führungsvorsprung
- 323: Führungsnut
- 324: Mittelsteg
- 325: Durchtrittsöffnung
- 326: Durchgangsöffnung
- 330: Seitenteil
- 331: Auflageabschnitt
- 332: Rasthaken
- 333: Rast-/Klemmabschnitt
- 334: Freigabeabschnitt
- 335: Vorsprung
- 336: Vorsprung
- 337: Rasthaken
- 338: Rastkopf
- 339: Durchgangsöffnung
- 340: Ausnehmung
- 341: Führungsvorsprung
- 342: Führungsnut
- 343: Rastkopf

- 400: Rahmen
- 401: Führungsnut
- 402: Führungsfläche
- 403: Führungsausnehmung
- 404: Führungsvorsprung
- 405: Ausnehmung
- 406: Rastkopf
- 407: Führungsvorsprung
- 408: Einschubausnehmung
- 409: Rastvorsprung
- 410: Ausnehmung
- 411: Anschlagfläche
- 412: Steg
- 413: Rastplatte
- 414: Rastausnehmung
- 415: Außenwand
- 416: Rastvorsprung
- 417: Ausnehmung

- a: Abstand

- Si; i ∈ N: Schritt

## Patentansprüche

1. Einsatz (7, 100, 200), umfassend
● einen Anbringabschnitt (300),
- gestaltet, bei Beenden eines Einschiebens des Einsatzes (7, 100, 200) in eine zugehörige, mittels einer Ausnehmung hinterschnittene Öffnung (12) eines Wandabschnitts (10) in der Öffnung (12) zugleich fixiert zu werden, und
- aufweisend eine erste Befestigungsvorrichtung (312, 313, 317, 325),
● eine Komponente (110, 210), aufweisend eine mit zumindest einem Teil der ersten Befestigungsvorrichtung (312, 313, 317, 325) korrespondierende zweite Befestigungsvorrichtung (112, 113; 211, 214), mittels dessen die Komponente (110, 210) an die erste Befestigungsvorrichtung (312, 313, 317, 325) des Anbringabschnitts (300) ortsfest anbringbar gestaltet ist, sowie
● einen Freigabemechanismus (334, 335), bei dessen Betätigung der Anbringabschnitt (300) außer Eingriff mit dem Wandabschnitt (10) gebracht wird.

2. Einsatz (7, 100, 200) gemäß Anspruch 1, wobei der Anbringabschnitt (300)
● einen Auflageabschnitt (311, 331) aufweist, der
- beim Einschieben des Einsatzes (7, 100, 200) in Richtung Öffnung (12) gerichtet ist und
- gestaltet ist, beim Einschieben des Einsatzes (7, 100, 200) in die zugehörige Ausnehmung des Wandabschnitts (10) auf einer dem Einsatz (7, 100, 200) zugewandten, mit der zugehörigen Öffnung (12) versehenen Außenwand (15) des Wandabschnitts (10) zu liegen zu kommen,
● zwei einander gegenüberliegende, voneinander wegweisende Führungselemente (332) aufweist, die
- den Einsatz (7, 100, 200) in Einschubrichtung entlang der zugehörigen Öffnung (12) führen und
- jeweils mit einer Rast- und/oder Klemmvorrichtung (333) versehen sind,
- wobei die Rast- und/oder Klemmvorrichtungen (333)
· die mit der Öffnung (12) versehenen Außenwand (15) zugewandt sind,
· voneinander weg weisen und
· in eine Richtung quer zur Einschubrichtung des Einsatzes (7, 100, 200) gesehen, zu den Führungselementen (332) einen Abstand (a) aufweisen, der so bemessen ist, dass das ortsfeste Fixieren des Einsatzes (7, 100, 200) im Wandabschnitt (10) erfolgt, indem die mit der zugehörigen Öffnung (12) versehene Außenwand (15) des Wandabschnitts (10) zwischen den Auflageabschnitten (311, 331) und den Rast- und/oder Klemmvorrichtungen (333) eingeklemmt ist.

3. Einsatz (7, 100, 200) gemäß Anspruch 2, wobei der Auflageabschnitt (311, 331) eine Breite in Richtung eines jeweils zugewandten Rands der Öffnung (12) von weniger als 5 mm oder von 2 mm aufweist.

4. Einsatz (7, 100, 200) gemäß einem der vorhergehenden Ansprüche, wobei der Anbringabschnitt (300) ein Halteprofil (310) und zwei Befestigungsteile (330) umfasst, die
● an zwei einander abgewandten Seiten des Halteprofils (310) am Halteprofil (310) befestigt sind und
● jeweils einen ersten Befestigungsabschnitt (332) aufweisen,
● wobei die ersten Befestigungsabschnitte (332) der Befestigungsteile (330) gestaltet sind, den Anbringabschnitt (300) am oder im Wandabschnitt (10) zu fixieren.

5. Einsatz (7, 100, 200) gemäß Anspruch 4, wobei zumindest das Halteprofil (310) einen zweiten Befestigungsabschnitt (30) aufweist, an den die Komponente (110, 210) ortsfest angebracht ist.

6. Einsatz (7, 100, 200) gemäß einem der vorhergehenden Ansprüche, wobei bei Betätigung des Freigabemechanismus' (334, 335), bei dessen Betätigung zumindest eines der Befestigungsteile (330) des Anbringabschnitt (300) werden.

7. Einsatz (7, 100, 200) gemäß Anspruch 4 oder 5, wobei das Halteprofil (310) aus einem Strangprofil hergestellt ist.

8. Einsatz (7, 100, 200) gemäß Anspruch 4 oder 5, wobei das Halteprofil (310) als Spritzguss- bzw. Extrusionsprofil oder Koextrusionsprofil hergestellt ist.

9. Einsatz (7, 100, 200) gemäß einem der vorhergehenden Ansprüche, wobei das ortsfeste Anbringen der Komponente (110, 210) und/oder das ortsfeste Einsetzen des Anbringabschnitts (300) mittels Verrastens und/oder Verklemmens erfolgt.

10. Einsatz (7, 100, 200) gemäß einem der vorhergehenden Ansprüche, wobei die Komponente (110, 210) einen Rahmen (120, 400) umfasst, der
● in Einschubrichtung des Anbringabschnitts (300) in die Ausnehmung gesehen, zumindest ein Betätigungs- oder Anzeigeelement (110, 210) umgibt, und
● einen Teil der zweiten Befestigungsvorrichtung (112, 113; 211, 214) aufweist.

11. Einsatz (7, 100, 200) gemäß Anspruch 10, wobei die Komponente (110. 210)
● einen Nottaster mit einem Betätigungsknopf (210) als zumindest ein Betätigungs- oder Anzeigeelement (110, 210) und
● eine Beleuchtung (49, 60) umfasst, aufweisend zumindest ein Leuchtmittel (49), das, in Betätigungsrichtung des Betätigungsknopfes (210) gesehen,
- neben dem Betätigungsknopf (210),
- hinter dem Betätigungsknopf (210) oder
- im Betätigungsknopf (210) diesen, wenn bestromt, durchleuchtend angeordnet ist.

12. Einsatz (7, 100, 200) gemäß Anspruch 11, ferner aufweisend eine Reflexions- oder Nachleuchtschicht oder -folie (60), angeordnet, von dem zumindest Leuchtmittel (49) emittiertes Licht gemäß vorbestimmter Vorgaben zu reflektieren bzw. auszusenden.

13. Einsatz (7, 100, 200) gemäß einem der vorhergehenden Ansprüche, wobei die Komponente (110, 210) ferner eine akustische Anzeige aufweist.

14. Einsatz (7, 100, 200) gemäß Anspruch 11 oder 13, ferner aufweisend einen Abschnitt (318), gestaltet, den von der akustischen Anzeige erzeugten Schall entlang eines vorbestimmten Wegs zu leiten.

15. Einsatz (7, 100, 200) gemäß einem der Ansprüche 11 bis 14, wobei
● die Komponente (110, 210) ferner eine Abdeckung (20) umfasst, die, in Betätigungsrichtung des Betätigungsknopfes (210) gesehen, vor dem Betätigungsknopf (210) angeordnet ist, und
● der Rahmen (400) als Nottasterrahmen ausgebildet ist, der einen ersten Führungsabschnitt (402, 403) aufweist, in dem die Abdeckung (20) mit einem zweiten Führungsabschnitt (22, 23) in Betätigungsrichtung des Betätigungsknopfes (210) geführt aufgenommen ist.

16. Einsatz (200) gemäß einem der Ansprüche 11 bis 15, wobei der Rahmen (400)
● mit einem Seitenrandabschnitt am Anbringabschnitt (300) um eine Achse parallel zum Seitenrandabschnitt drehgelenkig angebracht ist, wobei die Achse so verläuft, dass der Rahmen (400) um die Achse in eine Richtung vom sonstigen Einsatz (200) weg schwenkbar angeordnet ist, und
● mit dem Anbringabschnitt (300) oder dem Wandabschnitt (10) derart in Eingriff steht, dass
- das Herausschwenken des Rahmens (400) verhindert ist und
- der Eingriff zwischen Rahmen (400) und Anbringabschnitt (300) bzw. Wandabschnitt (10) von außen in Bezug auf den Wandabschnitt (10) lösbar gestaltet ist.

17. Einsatz (7, 100, 200) gemäß einem der Ansprüche 10 bis 16, wobei
• der Anbringabschnitt (300) eine sich entgegengesetzt zur Einschubrichtung verjüngende Rastnase (337) aufweist,
• der Rahmen (400) eine zur Rastnase (337) korrespondierende Rastausnehmung (414) aufweist, die von der Rastnase (337) in Eingriffsstellung hintergriffen wird,
• die Rastnase (337) in Richtung Eingriffsstellung federnd gelagert ist und
• der Rahmen (400) einen Zugang (405) aufweist, über den die Rastnase (337) entgegen der Wirkung der federnden Lagerung von der Rastausnehmung (414) weg und damit außer Eingriff mit der Rastausnehmung (414) bewegbar gestaltet ist.

18. Einsatz (100) gemäß einem der Ansprüche 10 bis 17, wobei die Komponente (110) als Schlüsselschalter (110, 40) ausgebildet ist, umfassend
• einen Profilzylinder (110) als zumindest ein Betätigungs- oder Anzeigeelement (110, 210),
• ein den Profilzylinder einfassendes Montageteil (120), das
- integraler Bestandteil des Rahmens (400) oder von diesem umgeben ist,
- am Halteprofil (310) befestigt ist und
- ferner einen dritten Befestigungsabschnitt (124, 125) aufweist, der
· sich, in Einschubrichtung des Anbringabschnitts (300) in die Ausnehmung gesehen, von einer Rückseite des Montageteils (120) in Einschubrichtung erstreckt, und
· an dem Profilzylinder (110) befestigt ist, und
• zumindest einen Schalter (61), der bei einem Drehen eines Schlüssels im Profilzylinder (110) betätigt wird.

19. Einsatz (7, 100, 200) gemäß Anspruch 18, ferner aufweisend eine Sicherung (325) gegen ein übermäßiges Drehen des Schlüssels bzw. des davon gedrehten Teils des Profilzylinders (110) in zumindest eine Drehrichtung.

20. Einsatz (7, 100, 200) gemäß einem der vorhergehenden Ansprüche, aufweisend eine Vorrichtung (42, 46, 47), eingerichtet, ein unberechtigtes Lösen oder Entfernen der Komponente (110, 210) oder, wenn vorhanden, des Rahmens (400) vom Wandabschnitt (10) bzw. vom restlichen Einsatz (7, 100, 200) als Sabotagezustand zu detektieren.

21. Einsatz (7, 100, 200) gemäß einem der vorhergehenden Ansprüche, ferner aufweisend eine Demontagesicherung (412, 35), gestaltet, ein unberechtigtes Lösen oder Entfernen der Komponente (110, 210) oder, wenn vorhanden, des Rahmens (400) vom Wandabschnitt (10) bzw. vom restlichen Einsatz (7, 100, 200) bis zu einem vorbestimmten Maß zu verhindern.

22. Einsatz (7, 100, 200) gemäß einem der vorhergehenden Ansprüche und gemäß Anspruch 10, wobei
• die Komponente (110, 210) an einer den Anzeige- und/oder Betätigungselementen (110, 210) gegenüberliegenden Seite mit zweiten Anzeige- und/oder Betätigungselementen versehen ist und
• die Ausnehmung des Wandabschnitts (10) durchgehend und so ausgebildet ist, dass die zweiten Anzeige- und/oder Beleuchtungselemente die Ausnehmung an der dem Einsatz (7, 100, 200) gegenüberliegenden Seite des Wandabschnitts (10) durchgreifen.

23. Einsatz (7, 100, 200) gemäß Anspruch 22, ferner aufweisend Befestigungseinrichtungen, gestaltet zum Befestigen eines von der dem Einsatz (7, 100, 200) gegenüberliegenden Seite des Wandabschnitts (10) her an den Einsatz (7, 100, 200) angesetzten, zweiten Rahmens (120, 400) des Einsatzes (7, 100, 200).

24. Flügelanlage (1), umfassend
• zumindest einen Flügel und
• zumindest einen Wandabschnitt (10) gemäß Anspruch 1, der
- Bestandteil eines Rahmens (10) oder einer Wand ist, der bzw.
die den zumindest einen Flügel umgibt, und
- zumindest an einer Wandseite zumindest eine Öffnung (12) als Öffnung (12) gemäß Anspruch 1 aufweist, sowie
• zumindest einen Einsatz (7, 100, 200) gemäß einem der vorhergehenden Ansprüche, der in eine zugehörige der zumindest einen Öffnung (12) in den Wandabschnitt (10) ortsfest eingesetzt ist.

25. Montageverfahren für einen Einsatz (7, 100, 200) gemäß einem der Ansprüche 1 bis 23, aufweisend die Schritte
• Befestigen (S2) der Komponente (110, 210) des zumindest einen Einsatzes (7, 100, 200) an dessen Anbringabschnitt (300) und
• Einschieben (S4) des somit montierten Einsatzes (7, 100, 200) in die zugehörige Öffnung (12) des Wandabschnitts (10), gemäß Anspruch 1.

26. Verfahren gemäß Anspruch 25, wobei
• der Anbringabschnitt (300) des zumindest einen Einsatzes (7, 100, 200) ferner gemäß Anspruch 4 ausgebildet ist und
• das Verfahren vor dem Schritt (S4) des Einschiebens des zumindest einen Einsatzes (7, 100, 200) ferner einen Schritt (S6) eines Befestigens der Befestigungsteile (330) des Anbringabschnitts (300) am Halteprofil (310) des Anbringabschnitts (300) umfasst.

27. Verfahren gemäß Anspruch 26, wobei
• das Halteprofil (310) des zumindest einen Einsatzes (7, 100, 200) ferner gemäß Anspruch 7 ausgebildet ist und
• das Verfahren
- vor dem Schritt (S2) des Befestigens der Komponente (110, 210) am Anbringabschnitt (300) die Schritte umfasst:
· Ablängen (S7) des Halteprofils (310) gemäß den Abmessungen der zugehörigen Öffnung (12) des Wandabschnitts (10) und
· Ausbilden (S8) von Befestigungselementen (312, 313, 325), eingerichtet, ein jeweiliges Befestigungsteil (330) festzuhalten.
